# EUROPÄISCHE PATENTSCHRIFT

(11) **EP 3 665 398 B1**
(45) Veröffentlichungstag und Bekanntmachung des Hinweises auf die Patenterteilung: **29.05.2024**
(21) Anmeldenummer: 18756148.5
(22) Anmeldetag: 03.08.2018
(51) Int. Cl.: F16F 7/10, F03D 80/00

(54) **SCHWINGUNGSTILGER MIT ROTATIONSDÄMPFER**
VIBRATION ABSORBER EQUIPPED WITH A ROTATION DAMPER
AMORTISSEUR DE VIBRATIONS EQUIPÉ D'UN DISPOSITIF D'AMORTISSEEMENT EN ROTATION

(30) Priorität: 08.08.2017 EP 17001353
(43) Veröffentlichungstag der Anmeldung: 17.06.2020
(73) Patentinhaber: FM Energie GmbH & Co. KG, 64646 Heppenheim (DE)
(72) Erfinder: MITSCH, Franz, 64646 Heppenheim (DE)
(74) Vertreter: Benz, Jürgen
(86) Internationale Anmeldenummer: PCT/EP2018/000384
(87) Internationale Veröffentlichungsnummer: WO 2019/029839

(56) Entgegenhaltungen:
- EP-A1- 2 681 463
- EP-A2- 2 378 118
- WO-A1-2017/121633

## Beschreibung

### Gegenstand der Erfindung

Die Erfindung betrifft einen neuartigen Rotationsdämpfer sowie einen diesen Dämpfer aufweisenden Schwingungstilger für Windkraftanlagen oder andere hohe und relativ zur ihrer Höhe schmale Anlagen oder Gebäude.

Die Erfindung betrifft insbesondere einen Schwingungstilger umfassend mindestens eine schwingende Masse an mindestens einem Pendelseil oder einer Pendelstange, wobei die durch eine Eigenfrequenz in Schwingung versetzte Masse durch einen erfindungsgemäßen Rotationsdämpfer als Teil des Tilgers gedämpft werden kann.

### Hintergrund und Aufgabe der Erfindung

Hohe und schlanke Gebäude und Anlagen unterliegen besonderen Schwingungsverhältnissen, welche durch technische Maßnahmen beachtet werden müssen, damit keine Schäden oder vorzeitige Ermüdungsprozesse eintreten. Dies gilt insbesondere für Windkraftanlagen, die aufgrund ihrer rasanten technischen Weiterentwicklung in den letzten Jahren vermehrt auch in extremeren Gegenden (z.B. Offshore) und Höhen eingesetzt werden, und zudem immer höhere Türme aufweisen, um die dort besseren Windverhältnisse auszunutzen. Solche Windkraftanlagen müssen den an ihnen durch Wind, Wellen, Wetter und Betrieb auftretenden Kräften Stand halten, welche die Anlagen an unterschiedlichen Stellen verschieden stark belasten. Insbesondere Schwingungskräfte können den Betrieb und die Sicherheit der Anlagen gefährden.

Nicht nur im Betrieb, sondern auch bei der Errichtung der Windkraftanlage oder eines hohen Turmes treten durch Wind oder andere Kräfte Schwingungen auf, die die Konstruktion gefährden können, vor allem deswegen, weil im Bau befindliche Anlagen noch nicht optimal auf solche Störschwingungen angepasst sind. Bei der Errichtung von Windkraftanlagen wird zuerst der Turm segmentweise errichtet. Anschließend wird die Gondel mit Rotor montiert. Die Situation ohne Gondel (Turmstummel alleine) ist bezüglich Resonanzanregung kritisch zu sehen, da in diesem Zustand größere Schwingamplituden entstehen können, als dies mit Gondel der Fall ist. Schwingungstilger für derartige Zwecke werden wird hierbei immer auf das Ende des obersten Turmsegmentes gesetzt und dort verschraubt. Dieser Vorgang wird solange wiederholt, bis der Turm komplett errichtet ist und die Gondel aufgesetzt werden kann. Die Eigenfrequenz der Anlage sinkt hierbei mit steigendem Montagefortschritt. Die Tilgerfrequenz muss somit in einem breiten Bereich (ca. Faktor 2) einfach anpassbar sein und befindet sich generell auf einem höheren Niveau im Vergleich zur fertig errichteten Anlage.

Es ist also notwendig die in diesen Anlagen auftretenden Schwingungen durch technische Maßnahmen gezielt und wirksam zu dämpfen. Dies geschieht mit Schwingungstilgern oder Schwingungsdämpfern unterschiedlicher Konstruktion entsprechend der diversen unterschiedlichen Einsatzfelder.

Die meisten Störkräfte wirken sich auch auf den Turm der Anlage aus, welcher in der Regel mit einer niedrigen Eigenfrequenz meist < 1Hz zum Schwingen angeregt wird. Aus diesem Grund werden im Stand der Technik oft Pendeltilger zur Schwingungsdämpfung eingesetzt, welche meist im Turm aufgehängt werden.

Pendeltilger für Windkraftanlagen sind im Stand der Technik bekannt.

So wird in der EP 1008747 (B1) ein Pendeltilger beschrieben, welcher ein elastisches Dämpfungselement in der Gelenklagerung des Pendels aufweist.

Die WO 2009/068599 beschreibt einen Pendeltilger, bei dem die Schwingungen der Pendelmasse durch Reibungsdämpfung mittels diverser Platten gedämpft werden. Bei dieser Lösung tritt das Problem einer hohen Wärmeentwicklung auf, welche sich durch eine sich mit der Temperatur ändernde Dämpfung bemerkbar macht. Ähnliche Schwierigkeiten ergeben sich beim Einsatz von Fluiddämpfern.

Die EP2378118A2 beschreibt einen Pendeltilger gemäß der Präambel der Ansprüche 1 und 17.

Alle diese Lösungen haben zudem den Nachteil, dass auf Grund des verfügbaren geringen Bewegungsraumes des Pendels im Turm nur kleine Schwingwege zurückgelegt werden können, was zur Folge hat, dass die erforderlichen Tilgermassen recht groß sein müssen, um Einfluss auf die entsprechende Eigenfrequenz und auf die Dämpfung nehmen zu können.

Dem zu begegnen, wurden Magnet- bzw. Wirbelstromdämpfer in Verbindung mit Pendeltilgern vorgeschlagen. Bei konventionellen Magnetdämpfer erfolgt die Dämpfung durch Anziehung oder Abstoßung entgegengesetzt- oder gleichgepolter Magnete, die aneinander vorbeibewegt werden. Wirbelstromdämpfer basieren funktionell darauf, dass in einem elektrischen Leiter, der sich durch ein sich änderndes Magnetfelds bewegt, ein Strom induziert wird. Die resultierenden Wirbelströme bilden wiederum Magnetfelder die dem ursprünglichen Magnetfeld entgegenwirkt und die Bewegung des Leiters bremst. Erhöht sich die Geschwindigkeit mit welcher sich der Leiter im Magnetfeld bewegt, wird der Wirbelstrom im Leiter erhöht, was zu einem stärkeren Magnetfeld führt, wodurch die Bewegung weiter und verstärkt gebremst wird.

Magnet- bzw. Wirbelstromdämpfer sind als solche dem Stand der Technik bekannt.

So wird in der DE 37 41 578 A1 eine Vibrationsdämpfungsvorrichtung für Präzisionsmaschinen beschrieben, welche auf der Bewegung einer Platte zwischen dem Nord- und Südpol eines Magnetfeldes beruht.

Die US 2007/0131504 beschreibt einen planen Vibrationsdämpfer, bei dem eine Transversalpendelvorrichtung in dem Feld von plan angeordneten Magnetfeldern bewegt wird.

In der EP 2 696 072 wird eine Schwingungstilgeranordnung für Windkraftanlagen mit einem Massenpendel und einem plattenförmigen Magnet- und Leiterelement beschrieben, wobei zwischen den Elementen eine Gleitanordnung, insbesondere eine Gleitschicht, eingebracht ist, die eine kompakte Bauweise des Tilgers mit nur geringer Temperaturabhängigkeit sicherstellen soll.. Das Massenpendel wird dabei im Schwingungsfall in vorzugsweise zwei Schwingungsvorrichtungen geführt, wobei es zu einer Bewegung der Leiterplatte gegenüber der Magnetplatte am unteren Ende des Massenpendels kommt.

Die genannten Magnetdämpfer weisen den Nachteil auf, dass sie meist sehr richtungsabhängig sind und nicht axial verdreht werden können. Überdies können mit ihnen mit vertretbaren Aufwand oft nicht ausreichend hohe Dämpfungsdichten erreicht werden, welche aber bei Einsatz von Windkraftanlagen, insbesondere von Windkraftanlagen mit Türmen von 100m Höhe und darüber, durchaus benötigt werden.

Die WO 2016/023628 beschreibt einen Wirbelstrom-Schwingungstilger, der höhere Dämpfungsdichten erreichen kann und überdies richtungsunabhängig ist. Der Dämpfer besteht im Wesentlichen aus einem Zylinderrohr, welches eine Magnetanordnung aufweist, sowie einem im Inneren geführten und beweglichen Leiterrohr. Beide Rohre werden im Bereich der Magnetanordnung reibungsfrei geführt, wobei die Führung des Leiterrohrs gegenüber dem magnetischen Zylinderrohr in einer bevorzugten Ausführungsform durch einen Rollenvorrichtung außerhalb des funktionellen Bereiches erfolgt.

Alle bekannten Magnet- bzw. Wirbelstromdämpfer haben die Eigenschaft, dass die Gegenkraft, die das Wirbelstromfeld erzeugt und der Bewegung der Masse entgegensetzt ist, von der Geschwindigkeit der Bewegung abhängig ist. Da aber in hohen Türmen wie bei Windkraftanlagen oder auch in hohen Bauwerken oft langsame Bewegungen durch die Erregerfrequenz generiert werden (Wind, Erdbeben etc.), entsteht das Problem, dass die erzeugte Kraft des Wirbelstromfeldes nicht ausreicht, um eine ausreichenden Dämpfung bei speziell langsamen Bewegungen zu erzielen. Gleiches gilt, wenn die Amplituden der Schwingung gering sind. Man kann sich damit helfen, dass man die Magnetdichte beispielsweise durch eine erhöhte Anzahl von Magnetelementen generell oder pro Fläche erhöht. Dies erhöht aber nicht nur die Kosten sondern auch den benötigten Platzbedarf, der speziell in den Türmen von Windkraftanlagen oft nicht vorhanden ist. Generell ergibt sich aber bei kleiner Bauweise, dass bei Betrieb die Magnetelemente warm bis heiß werden, was zu einer Verringerung der Temperaturunabhängigkeit des Dämpfers führt, da deutlich mehr Wärme auf engem Raum durch die erhöhte Schwingungsenergie entsteht.

Es bestand somit die Aufgabe, Magnetdämpfer für die Dämpfung von Eigenfrequenzen von unter 30 Hz, insbesondere unter 10 Hz, vorzugsweise zwischen 0.15 und 5 Hz, insbesondere zwischen 0.5 und 5 Hz, vorzugsweise zwischen 0.15 und 2 Hz in hohen und schlanken Bauwerken und technischen Anlagen, insbesondere in Windkraftanlagen, zur Verfügung zu stellen, welche die beschriebenen Nachteile, insbesondere die eher geringe Dämpfung bei Zuständen mit niedriger Bewegungsenergie, nicht weiter aufweisen.

Die Aufgabe wurde durch Bereitstellung der unten und in Ansprüchen spezifizierten Wirbelstromdämpfer sowie von Schwingungstilgern, die solche Dämpfer aufweisen, gelöst.

### Zusammenfassung der Erfindung

Die Aufgabe wurde insbesondere dadurch gelöst, dass die an sich lineare Bewegung der schwingenden Masse eines Pendeltilgers durch entsprechende konstruktive Maßnahmen in eine Rotationsbewegung überführt wird, wodurch die erzielbare Rotationsgeschwindigkeit durch die Wahl eines entsprechend großen, vorzugsweise rotationssymmetrischen Rotationselementes ein Vielfaches der Lineargeschwindigkeit der bewegten Masse sein kann. Durch Anbringung von dämpfenden / bremsenden Einrichtungen am Rotationselement kann so ein verstärkter Dämpfungseffekt erzielt werden.

Insbesondere wenn ein Wirbelstrom-Dämpfungssystem zum Einsatz kommt, bei dem Leiterelemente gegenüber Magnetelementen relativ zueinander durch Rotation bewegt werden, kann ein hoher von der Drehzahl abhängiger Dämpfungseffekt erzeugt werden. Wie bereits erwähnt, ist die Geschwindigkeit der rotierenden Bewegung maßgebend für den zu erzielenden Dämpfungseffekt bei dem hier angewandten Wirbelstrom-Prinzip. Erfindungsgemäß kann somit, je nach Konstruktion, eine etwa 2 - 20 fache Geschwindigkeit der rotierenden Leiterelemente gegenüber den feststehenden Magnetelementen (oder umgekehrt) und damit eine 4 - 400 fache Dämpfungskraft (lineare Dämpfungskonstante: N x s/m) bei gleicher Anzahl der Magnete im Vergleich zu den bekannten Wirbelstromdämpfern erreicht werden.

Ferner lässt sich in einem solchen rotierenden System aufgrund der höheren Bewegungsgeschwindigkeit die vermehrt erzeugte Wärme leichter abführen, gegebenenfalls auch unter Zuhilfenahme von passiven oder aktiven Kühleinrichtungen wie Kühlrippen oder Kühlschaufeln auf den verwendeten rotierenden Scheiben, Rädern oder Hohlrädern, wobei diese allein durch ihre Drehungen für eine kühlende Luft-Verwirbelung sorgen, ähnlich einem Lüfter.

Es ist jedoch auch erfindungsgemäß möglich eine vergleichbare Bremswirkung zu erzielen, wenn beispielsweise die hier bevorzugt vorgeschlagene Wirbelstromdämpfungsanordnung durch eine andere bremsende Einrichtung, wie z.B. einer konventionellen Magnetdämpfungseinrichtung (durch magnetische Anziehung und Abstoßung), oder eine Reibungsdämpfereinrichtung oder eine Fluiddämpfereinrichtung in dem Rotationselement der erfindungsgemäßen Schwingungstilger ersetzt wird.

Gegenstand der Erfindung ist somit eine Schwingungstilgeranordnung gemäß Anspruch 1.

Gegenstand der Erfindung ist weiterhin eine Schwingungstilgeranordnung gemäß Anspruch 17.

Weitere Ausführungsformen sind in den abhängigen Ansprüchen definiert.

### Beschreibung der Erfindung und der Ausführungsformen

Der erfindungsgemäße Schwingungstilger umfasst eine übliche Massen-Pendel- Vorrichtung, sowie mindestens eine erfindungsgemäße Dämpfungsvorrichtung (10).

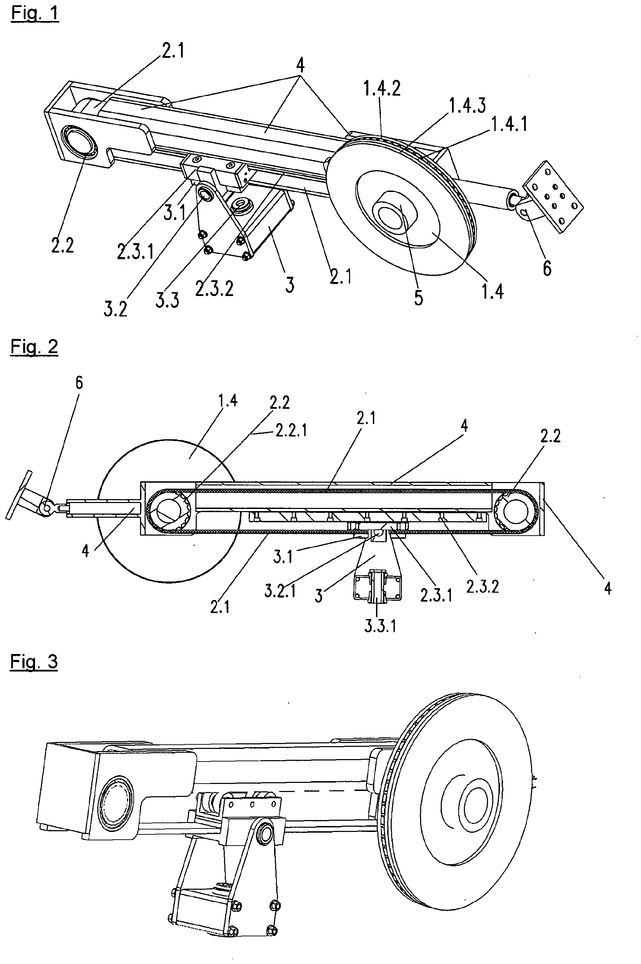

Die erfindungsgemäße Dämpfungsvorrichtung (10) umfasst wiederum eine Tragekonstruktion (4), eine Transportvorrichtung (2), die eigentliche Dämpfungsanordnung (1) sowie ein Anbindungselement (3) (Fig. 1)

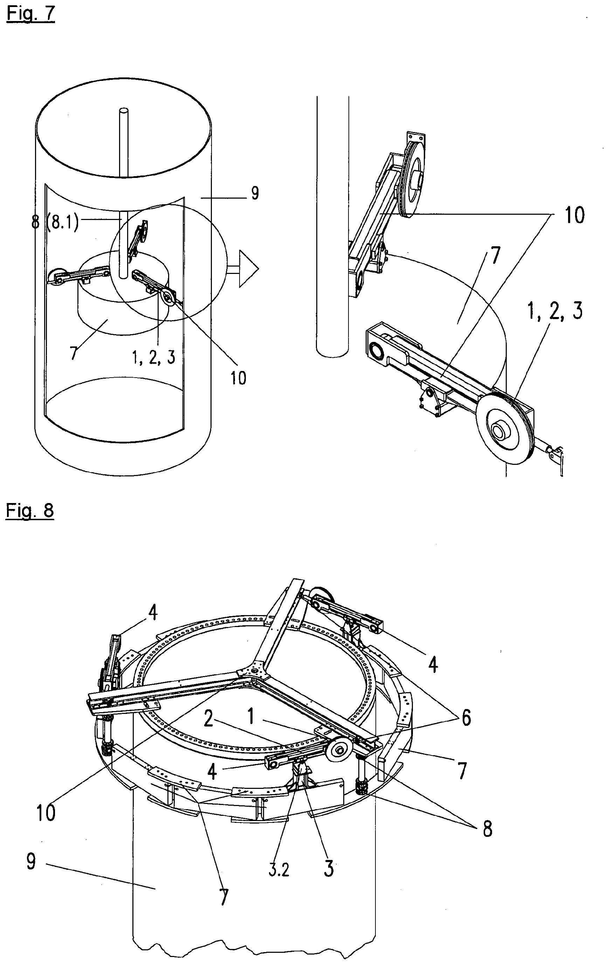

In einer zu dämpfenden Anlage, beispielsweise einer Windkraftanlage, können mehrere der erfindungsgemäßen Dämpfungsvorrichtungen (10), insbesondere zwei bis sechs, eingebaut sein (Fig. 8)

An der Tragekonstruktion (4) ist die Transportvorrichtung (2) angebracht oder ist ein Teil von dieser. An der Transportvorrichtung (2) ist wiederum die eigentliche Dämpfungsanordnung (1) befestigt.

Die Dämpfungsanordnung (1) umfasst im Wesentlichen mindestens ein rotierendes erstes Element (1.1) welches gegenüber einem feststehenden zweiten Element (1,2) bewegt wird, wobei zwischen diesen Elementen Dämpfungselemente (1.3) angeordnet sind.

Diese Dämpfungselement (1.3) sind vorzugsweise Wirbelstrom-Dämpfungsanordnungen, bzw. -elemente (1.4), können aber erfindungsgemäß auch andere sein, wie z.B. Reibungsdämpfungsanordnungen (1.5) oder Fluiddämpfungsanordnungen (1.6), oder auch Dämpfungsanordnungen mit konventionellen Magnetelementen (1.7), wie sie alle an sich im Stand der Technik bekannt sind. Beispiele hierfür sind elektrische Generatoren, welche die Verlustarbeit in elektrische Energie umwandeln um diese in Widerständen zu verheizen, direkt weiterverwenden oder zur späteren Weiterverwendung z.B. in Akkus puffern können.

Die Transportvorrichtung (2), welche an der Tragekonstruktion (4) angebracht ist, ist in einer ersten Ausführungsform der Erfindung über ein Anbindungselement (3) mit der schwingenden Masse (7) verbunden (Fig. 1 - 3)

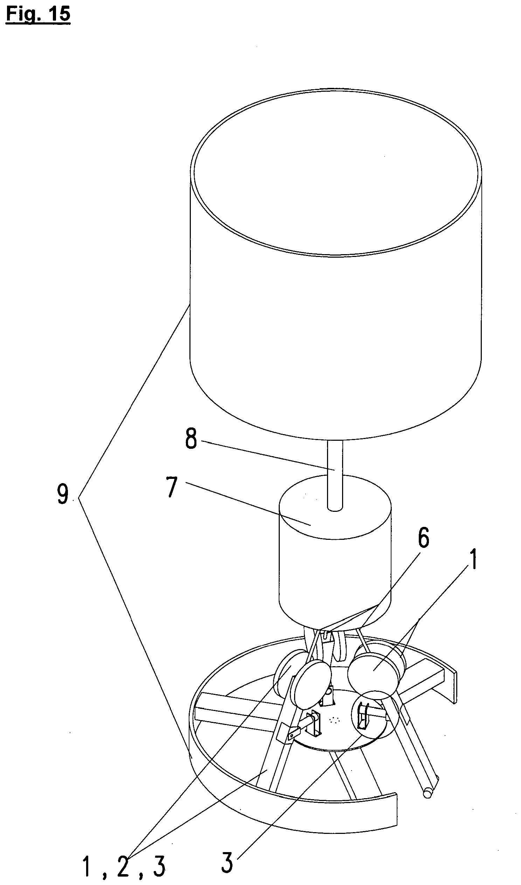

Die Transportvorrichtung (2) kann auch in einer zweiten Ausführungsform der Erfindung über das Anbindungselement (3) mit der zu dämpfenden Struktur (9), z.B. der Turmwand einer Windkraftanlage, verbunden sein. In diesem Fall ist die schwingende Masse (7) über ein Anbindungselement (6) mit der Tragekonstruktion (4) der Transportvorrichtung (2) verbunden. (Fig. 15)

In beiden Fällen erzeugt die Bewegungsenergie der schwingenden Masse (7) eine in eine Richtung wirkende lineare Hin-und Her-Bewegung der Transportvorrichtung (2), wodurch Rotationsbewegungen der besagten Dämpfungsanordnung (1) eintreten und Kräfte erzeugt werden, welche der schwingenden Masse (7) entgegenwirken.

Das Anbindungselement (3) ist im einfachsten Fall ein entsprechend gestaltetes Gelenk, so dass Transportvorrichtung und Masse mehr oder weniger direkt in Verbindung stehen.

In einer bevorzugten Ausführungsform ist das Anbindungselement ein eigenständiges Bauteil, welches über ein oder zwei Schwenk-Gelenke (3.2) um einen Achse quer zur linearen Bewegung der Transportvorrichtung bewegbar ist, und eine weitere Gelenkverbindung (3.3) zur schwingenden Masse (7) bzw. ggf. zur Struktur (9) aufweist, die so gestaltet ist, dass eine relative räumliche Bewegung gewährleistet ist. In einer weiteren Ausführungsform ist die Gelenkverbindung (3.3) des Anbindungselements (3) durch ein elastisches Gelenk (15) ersetzt, welches Gier (Dreh)- und Nick-Bewegungen gleichzeitig zulässt.

Als Transportvorrichtung (2) kommen erfindungsgemäß alle technischen Mittel in Frage, die eine Überführung einer linearen Bewegung in eine Rotationsbewegung ermöglichen, wie beispielsweise Laufriemen, Laufband, Zahnriemen, Zahnstange, Spindel/Kugelspindel oder Schubkurbel, sowie entsprechende Einrichtungen zum Transport, wie Rollen, Schienen, etc.

Allen diesen Mitteln ist gemeinsam, dass sie erfindungsgemäß ihre lineare Bewegungsenergie auf ein mit ihnen verbundenes rotierendes Element (1.1) mit einem frei wählbaren Radius übertragen. Mit größer werdenden Radius des rotierenden Elements (1.1) kann aber eine deutlich höherer Umdrehungsgeschwindigkeit erzielt werden als durch die Geschwindigkeit der lineare Bewegung vorgeben wird.

In einer bevorzugen Ausführungsform der Erfindung kommt ein Laufriemen (z.B. Flachriemen, Keilriemen) oder Laufband, insbesondere ein Zahnriemen (2.1) zum Einsatz, welcher auf Transportrollen (2.2) oder Zahnrädern bewegt wird. Hierbei dient mindestens eine Transportrad auch als Antriebsrad (2.2.1) für das besagte rotierende Element (1.1), welches erfindungsgemäß einen deutlich größeren Radius aufweist als das Antriebsrad.

In der einfachsten Ausführungsform besteht die Transportvorrichtung also aus einem Zahnriemen, der auf zwei gegenüberliegenden an der Tragekonstruktion gelagerten Transportrollen (2.2) geführt wird und somit zusammen mit dem an ihm befestigten Anbindungselement (3)(3.1) hin und her bewegt werden kann, die wiederum über die besagte Gelenkverbindung (3.3.1) angebunden ist.

Selbstverständlich kann der Zahnriemen oder Laufriemen auch über mehr als zwei Transportrollen geführt werden. Im Falle eines Zahnriemens sind die Transportrollen vorzugsweise mit Zähnen ausgestattet, die einen schlupffreien Transport des Anbindungselementes mit der Masse ermöglichen.

Das rotierende Element (1.1) ist bei allen Ausführungsformen der Erfindung Teil der Dämpfungsanordnung (1) und steht unmittelbar mit der Transportvorrichtung (2) in Verbindung. Das rotierende Element kann beispielsweise ein Rad, eine Scheibe oder ein Hohlrad sein. Im erfindungsgemäßen Wirbelstromdämpfer ist das rotierende Element (1.1) mit Magnetelementen (1.4.2) oder Leiterelementen (1.4.1) ausgestattet.

Dieser Dämpfertyp soll im Folgenden näher erläutert werden.

Die Leiterelemente werden von einem den elektrischen Strom gut leitenden Material wie beispielsweise Aluminium oder Kupfer oder entsprechende Legierungen gebildet. Die Leiterelemente können in Form einer Platte, eines Bandes, eines Ringes oder von einzelnen Teilen, die auf einer Trägerplatte, einem Trägerband oder einem Trägerring angeordnet sind, vorliegen.

Die Magnetelemente werden von Magnetringen oder aus praktikablen Gründen einzelnen Stabmagneten gebildet, die auf einer Trägerplatte, einem Trägerrad, einem Trägerband oder einem Trägerring angeordnet sind. Benachbarte Magnetelemente werden vorzugsweise so platziert, dass sich Nord- und Südpol gegenüberliegen. Es ist auch möglich Elektromagnetelemente einzusetzen, welche den Vorteil haben, dass die Feldstärke regelbar ist, und ggf. sogar ausgeschaltet werden kann.

Das rotierende Element (1.1) ist bei einer ersten Ausführungsform der Erfindung eine Leiterscheibe oder -platte, oder Trägerscheibe/platte für Leiterelemente, vorzugsweise aus Aluminium. Im Falle einer Trägerplatte können die Leiterelemente an der Seitenfläche angebracht sein.

Es ist aber auch möglich, das Leiterelement als geschlossenes Band am Umfang des als Scheibe oder Rad ausgebildeten rotierenden Elementes (1.1) - also am Radkranz desselben - anzubringen, wobei in diesem Fall der Umlauf des Rades oder der Scheibe, bzw. des rotierenden Elementes (1.1) ausreichend breit sein sollte.

In einer anderen Ausführungsform ist das rotierende Element (1.1) Träger für eine Magnetanordnung aus Magnetelementen (1.4.2), vorzugsweise in Form einer Scheibe oder eines Rades, oder Hohlrades, wobei die Magnetelemente auf der Scheiben- oder Radfläche angebracht sind.

Es ist aber auch hier möglich, die beschriebenen Magnetelemente am Umfang des als Scheibe oder Rad ausgebildeten rotierenden Elementes (1.1) - also am Radkranz desselben - anzubringen.

Das rotierende Element (1.1) trägt also entweder die Leiterfunktion oder die Magnetfunktion der Wirbelstrom-Dämpfungsanordnung. Ihm gegenüber ist erfindungsgemäß stets ein zweites aber feststehendes Element (1.2) angeordnet, wobei die beiden Elemente (1.1)(1.2) durch einem im Wesentlichen gleichbleibenden kleinen Luftspalt von etwa 1 - 5 mm voneinander getrennt sind. Das feststehende Element (1.2) ist dabei an der Tragekonstruktion (4) montiert oder ist ein Teil derselben. Der durch den Luftspalt gebildete Raum zwischen dem ersten und zweiten Element im Bereich der funktionellen Teile (Magnet / Leiter) ist völlig reibungsfrei, und unterscheidet sich somit zum Beispiel von dem Schwingungstilger der EP 2 696 072, der hier eine eigene Gleitanordnung zwischen den relativ zueinander bewegten Teilen der Wirbelstromanordnung vorsieht.

Das durch die lineare Bewegung der Transportvorrichtung (2) zur Rotation angeregte Element (1.1) wird also gegenüber dem feststehenden Element (1.2) bewegt, wodurch ein Wirbelstrom mit einem Magnetfeld induziert wird, welches der Drehung entgegenwirkt und zu einer Dämpfung letztlich der schwingenden Masse (7) und der Konstruktion (9) führt.

In einer Ausführungsform der Erfindung wird also das rotierende erste Element (1.1) mit einer Leiterfunktion, wie beschrieben, ausgestattet, und demnach das feststehende zweite Element (1.2) mit einer Magnetfunktion.

In einer anderen Ausführungsform ist umgekehrt das rotierende erste Element (1.1) mit einer Magnetfunktion und das feststehende zweite Element (1.2) mit einer Leiterfunktion versehen. In einer weiteren Ausführungsform der Erfindung sind Magnetelemente in einem bestimmten Radius zum Drehpunkt auf der Seitenfläche der Scheibe oder des Rades (des rotierenden oder feststehenden Elementes) angebracht, und radial oder tangential angeordnet. Die Magnetelemente können dabei auch in mehreren Reihen mit unterschiedlichem Radius angeordnet sein. Der Radius bestimmt, wie gesagt, die Geschwindigkeit mit der sich die Magnetanordnung gegenüber dem Leiterelement bewegt, und damit auch den Dämpfungseffekt.

In einer anderen Ausführungsform der Erfindung sind Magnetelemente (1.4.2) am Umfang, bzw. am Radkranz des rotierenden Elementes (1.1) angebracht und das Leiterelement (1.4.1) ist auf dem feststehenden Element (1.2) angebracht, welches hier gegenüber rotierenden Element (1,1) angeordnet ist und dieses umschließt.

Umgekehrt, kann auch das Leiterelement (1.4.1) am Umfang oder Radkranz des rotierenden Elementes (1.1) angebracht sein, bzw. das rotierende Element kann selbst als Leiterelement ausgebildet sein (z.B. eine Aluminiumscheibe), während die Magnetelemente auf dem umschließenden feststehenden Element angeordnet sind.

Die Magnetelemente können in allen Fällen radial oder tangential in Bezug auf das rotierenden bzw. feststehende Element angeordnet sein. Sie können auch in mehreren Reihen über- oder untereinander auf der Seitenfläche einer Trägerscheibe oder eines Trägerrades angeordnet sein. Sie können weiterhin auch entlang des Umfangs oder auf dem Umfang in unterschiedlicher Anzahl oder mit unterschiedlicher Feldstärke angeordnet sein, wodurch bei einem bestimmten Bewegungszustand der Masse (7) eine im Vergleich zum vorangegangenen oder nachfolgenden Bewegungszustand ein höherer oder niedrigerer Dämpfungseffekt erreicht werden kann.

Der Wirbelstrom-Dämpfungseffekt kann durch Einsatz ferromagnetischer Elemente (1.4.3), beispielsweise eine Eisen- bzw. Stahlscheibe verstärkt werden, welche in Kontakt mit dem Leiterelement (1.4.1) auf der den Magnetelementen entgegengesetzten Seite gebracht werden kann.

In einer besonderen Ausführungsform dieser Erfindung werden Fliehkraftmassen (1.4.11) auf einem rotierenden Element eingesetzt, die Leiterelemente (1.4.9) in Form von Kreissegmenten aufweisen und die drehzahlabhängig in funktionelle Nähe zu den gegenüber liegenden Magnetelemente (1.4.8) unter Verringerung oder Erhöhung der Breite des Luftspaltes gebracht werden können. Hierdurch kann einen Modifizierung oder Adaptierung des Dämpfungseffektes an die Gegebenheiten des Schwingungssystems erreicht werden.

Auch ist es möglich die Anschlagpunkte des Anbindungselementes (3), beispielsweise auf der genannten Zahnriemen-Transportvorrichtung, in Abhängigkeit von der Bewegung der Masse bzw. des Pendels so zu wählen, dass der Dämpfungseffekt im Bereich der Umkehrpunkte des Pendels relativ hoch ist verglichen mit der Dämpfung beim Durchlauf des Pendels durch den untersten Punkt mit der größten Geschwindigkeit. Bei völlig symmetrischer Anordnung und freiem Lauf der linearen Bewegung der Transportvorrichtung ist hingegen die Dämpfung beim Durchlauf der Pendelmasse am untersten Punkt am größten, da hier die Geschwindigkeit des Pendels am größten ist.

Ähnliche Effekte in Bezug auf die Umkehrung oder die Verschiebung der Dämpfungseffekte lassen sich auch erzielen, wenn man die Vorrichtung nicht horizontal positioniert, sondern vertikal oder in einem Winkel zwischen >0° und <90° zur Horizontalen. Die Dämpfung lässt sich somit an die gewünschten Gegebenheiten des Schwingungssystems adaptieren.

Das rotierende Element (1.1) ist vorzugsweise rotationssymmetrisch in Form einer Scheibe oder eines Rades (mit Speichen) oder eines Hohlrades. Je nach Größe der zu dämpfenden Anlage bzw. des Massenpendels hat es einen Durchmesser zwischen 300 und 800 mm, insbesondere von etwa 500 mm. Entsprechend ähnliche Maße besitzt das feststehende Element (1.2) und ist ebenfalls vorzugsweise rotationssymmetrisch.

Die Tragekonstruktion (4) mit der Transportvorrichtung (2) hat dementsprechend eine Länge zwischen 600 mm und 1500 mm, vorzugsweise 800 bis 1000 mm. Die angegebenen Größen sind jedoch erfindungsgemäß nicht limitierend und können sowohl größere als auch kleinere Werte annehmen, entsprechend der zu dämpfenden Schwingungssysteme.

Die erfindungsgemäße Dämpfervorrichtung (10) kann auch mehrere Dämpfungsanordnungen (1) auf der Transportvorrichtung (2) vorsehen, also auch mehrere, insbesondere 2 - 4 rotierende Elemente (1.1) und dementsprechend auch mehrere feststehende Elemente (1.2).

Im Falle einer Transportvorrichtung mit Laufriemen oder Zahnriemen (2.1) welche auf beispielsweise zwei Rollen geführt wird, kann nicht nur eine Rolle als Antriebsrad (2.2.1) für ein rotierendes Element (1.1) über die Welle (5) fungieren, sondern es können zwei oder mehr Rollen (2.2) der Transportvorrichtung über jeweils eine Welle (5) mit jeweils einem rotierenden Element (1.1) verbunden sein. Dadurch können nicht nur höherer Dämpfungseffekte erzielt werden, sondern es wird auch eine symmetrischer Lastverteilung erreicht, was sich schonend auf den Verschleiß der Transportvorrichtung und damit des gesamten Schwingungstilgers auswirkt.

Es ist auch möglich, das einen Welle (5) angetrieben durch ein Antriebsrad (2.2.1) zwei, drei oder vier rotierende Elemente (1.1) an beiden Enden der Welle (5) aufweist.

Im Falle einer einzigen Riemen- oder Bandvorrichtung (2.1)(2.2) auf der Transportvorrichtung können so bis zu vier Dämpfungsanordnungen (1) zum Einsatz kommen.

In einer weiteren Ausführungsform der Erfindung kann zwischen Antriebsrad (2.1.1) bzw. einem ähnlich funktionell wirksamen Bauteil und dem rotierenden Element (1.1), die beide über die Welle (5) verbunden sind, ein Getriebe mit Übersetzung eingebaut sein, welche es ermöglicht, dass pro Umdrehung des Antriebsrades mehr als eine Umdrehung des rotierenden Elementes (1.1) bewirkt wird. Somit kann weiter für eine Erhöhung der Umdrehungsgeschwindigkeit des rotierenden Elementes (1.1) gesorgt werden, und damit für eine Erhöhung des durch Wirbelstrom bedingten Dämpfungseffektes.

Im Falle des Einsatzes eines Zahnriemens oder Laufbandes /-riemens mit Transportrollen kann die Führung des Anbindungselementes (3) bzw. dessen Befestigung (3.1) am Riemen weitgehend lastfrei erfolgen. Es bedarf daher in der einfachsten Ausführungsform der Erfindung nicht notwendigerweise eines Stütz- oder Führungselementes. Es ist jedoch vorteilhaft und oft notwendig, ein solches Stütz- und Führungselement in Form einer Rolloder Gleitvorrichtung (2.3) zumindest im Bereich der Befestigung (3.1) des Anbindungselementes (3) zur Verfügung zu stellen. Beispielsweise kann ein Laufwagen, (2.3.1) an denen sich der Riemen abstützen kann und der auf Laufschienen (2.3.2) bewegbar ist, oder ein Rollenlaufband (2.3.3) eingesetzt werden, oder alternativ auch eine Gleitvorrichtung (2.3.4).

Wie oben beschrieben, weisen die erfindungsgemäßen Schwingungstilgeranordnungen als eigentliches Dämpfungselement vorzugsweise eine Wirbelstromeinrichtung auf, welche zwischen dem rotierenden ersten Element (1.1) und dem feststehenden zweiten Element (1.2) untergebracht ist.

Schwingungstilger, welche mit einer anderen Dämpfungsart arbeiten, aber ansonsten genau so aufgebaut sind, sind jedoch ebenfalls Gegenstand der Erfindung. So können Reibungselemente unterschiedlichster Art, inklusive feste Materialien oder Flüssigkeiten als Dämpfungsmedium dienen. Entsprechende Materialien und Vorrichtungen sind im Stand der Technik bekannt. Als Reibungselement können z.B. rotierende Bremsbelege auf dem rotierenden Element (1.1) dienen, die rotationsabhängig an das als Bremstrommel gestaltete ebenfalls rotationssymmetrische, feststehende Element (1.2) gedrückt werden, beispielsweise durch rückstellbare Fliehkraftmassen.

Weiterhin besteht die Möglichkeit die Rotationsscheibe als Scheibenbremse auszuführen. Zusätzlich kann eine oder mehrere zusätzliche Bremsscheiben angebracht werden. Mit dieser Zusatzbremse können Lastspitzen abgefangen werden. Ebenso kann die rotierende leiterscheibe gleichzeitig als Scheibenbremse verwendet werden die als Überlastbremse verwendet wird.

Auch in ihrer Viskosität veränderbare Fluide können als Reibungselemente eingesetzt werden (Fluiddämpfer). Letztlich können auch konventionelle Magnetdämpfer in Schwingungstilgern verwendet werden.

### Liste der Bezugszeichen:

- **1**: Dämpfungsanordnung
1.1 rotierendes (erstes) Element
1.1.1 Lüfter, Lüfterschaufel / Kühler
1.2 feststehendes (zweites) Element
1.3 Dämpfungsanordnung (generell)
1.4 Wirbelstromdämpfung-Dämpfungsanordnung (Elemente)
1.4.1 Leiterelement / Leiterplatte
1.4.1.1 Leiterelement auf Träger
1.4.2 Magnetelement
1.4.2.1 magnetische Elemente auf Träger
1.4.3 ferromagnetisches Element
1.4.4 erste Magnetscheibe 1.4.5 zweite Magnetscheibe
1.4.6 Leiterscheibe
1.4.7 Träger für Magnete (Fliehkraftdämpfer)
1.4.8 Magnetelemente (Fliehkraftdämpfer)
1.4.9 Leiterelement, (Fliehkraftdämpfer)
1.4.10 Luftspalt
1.4.11 Fliehkraftmassen
1.4.12 Welle mit Trägerplatte
1.4.13 Rückziehfeder mit Gelenken
1,5 Dämpfungselemente Reibungsdämpfung
1.5.1 rotierende Platte mit Welle
1.5.2 Bremstrommel-feststehendes Element
1.5.3 Fliehkraftmassen
1.5.4 Rückzugfeder mit Gelenken
1.5.6 Bremsbelag
1.6 Fluid-Dämpfungsanordnung
1.7 Magnet-Dämpfungsanordnung (konventionell)
- **2**: Transportvorrichtung
2.1 Laufriemen, Laufband, Zahnriemen
2.2 Transportrollen/-räder / Zahnräder
2.2.1 Antriebsrad für rotierendes Element 1.1
2.3 Roll-/Gleitvorrichtung
2.3.1 Laufwagen
2.3.2 Laufschiene
2.3.3 Roll-Laufbahn
2.3.4 Gleitteil / Gleitanordnung
2.4 Zahnstange
2.5 Spindel/Kugelspindel
- **3**: Anbindungselement
3.1 Befestigung /Fixierung zu 2.1, 2.4, 2.5
3.2 Gelenkverbindung zurTransportvorrichtung
3.2.1 Schwenk-/Kippgelenk
3.3 Gelenkverbindung zur schwingender Masse 5
3.3.1 Dreh- oder Kugelgelenk
- **4**: Tragekonstruktion
- **5**: gemeinsame Welle für Antriebsrad 2.2.1 und rotierendes Element 1.1
5.1 Lagerung für Welle
- **6**: Gelenkverbindung zwischen Tragekonstruktion (4) und zu dämpfende Struktur
- **7**: (im Betrieb) schwingende Masse
- **8**: Masseaufhängung
8.1 Pendelstange / Pendelseil
- **9**: zu dämpfende Struktur (Turm, Bauwerk)
- **10**: Dämpfungsvorrichtung umfasst (1), (2) (3) und (4)
- **11**: Errichtungskonstruktion
- 12: Tandem Scheibe
12.1. äußere Leiter Scheibe (1.4.6)
12.2. innere Leiter Scheibe
12.3 Rotierende Verbindung der Leiterscheiben
12.4. Magnetscheibe mit beidseitigen Magneten
- 13: Arretier Stift
13.1 Sicherung für Arretier Stift
- 14: Federn zur Frequenzanpassung
14.1. Feder Anbindung an Transportvorrichtung (2)
14.2. Feder Anbindung an Tragekonstruktion (4)
14.3 Langloch zur Federverschiebung
- 15: Dreh - Nick Einheit
15.1 Elastomer Element für Gier Bewegung
15.2 Elastomer Element für Nickbewegung
15.3 Befestigungselement der Dämpfer Einheit
15.4 Befestigung von 15.2
15. 5 Richtung der Gier Bewegung
15.6 Richtung der Nick Bewegung
- 17: Verstelleinrichtung zur Wegabhängigen Dämpfung
17.1 Verstell Einrichtung
17.2 Feder Halteelement
17.3 Verstell Nocken
17.4 Verstell Kurven an Verstell Einrichtung
17.5 Rückhol- Federelement
17.6 Bremsbelag
17.7 Brems-Reibbelag (optional)
17.8. Drehhemmung
17.9 rotierender und axial fester Bereich
17.10 Nicht rotierend und axial verschiebbarer Bereich
17.11 Abstand Magnet-Leiterscheibe
17.12 Abstand Bremsscheibe
17.13 Gleit Buchse
17.14 Laufrollen (nicht6 dargestellt)
- 18: Zusatz Scheibenbremse
18.1 Bremszange
18.2 Bremszangen Fixierung
- 19: Vorrichtung Temperaturkompensation
19.1 Thermostat Aktuator
19.2 Isolierung
19.3 Verbindung zur Druckübertragung
19.4 Bewegungsbegrenzung
- 20: Vorrichtung Temperaturkompensation
20.1 Feder-Abstützplatte
20.2 Druckfeder
20.3 Einhausung
20.4 Aktuator Träger
20.5 Abstandshalter
20.6 Anschlag kalter Zustand
20.7 Luftspalt kalter Zustand
20.8 Luftspalt warmer Zustand
20.9 Aktuator
20.10 rotierende Bauteile
20.11 stehende Bauteile
20.12 Anschlag warmer Zustand

Im Folgenden werden die in den Abbildungen im Detail dargestellten Ausführungsformen geschildert.

Fig. 1 zeigt eine perspektivische Sicht einer Dämpfervorrichtung (10) gemäß der Erfindung, die in einem Schwingungstilger mit Pendel und Pendelmasse zum Einsatz kommen kann. Auf einer Tragekonstruktion (4) ist eine Transportvorrichtung (2) montiert. Die Tragekonstruktion weist ein Verbindungselement mit Gelenk (6) auf, um die Tragekonstruktion mit der schwingenden und zu dämpfenden Struktur (9) zu verbinden oder umgekehrt. Die Transportvorrichtung (2) besteht aus zwei gelagerten Rollen am linken und am rechten Ende der Vorrichtung, Die beiden Rollen sind über ein Laufband / Laufriemen (2.1) miteinander verbunden. Die eine (rechte) Rolle ist auf einer Welle (5) gelagert und treibt diese bei ihrer Rollbewegung an und damit auch die eigentliche scheibenförmige Dämpfungsanordnung (1), welche auf die Welle gesteckt ist und im konkreten Fall Elemente einer Wirbelstrom-Dämpfungsanordnung (1.4) aufweist. Im Einzelnen sind dies: eine Leiterscheibe (1.4.1), die rotieren kann, und dem rotierenden ersten Element (1.1) entspricht, eine Magnetscheibe (1.4.2), welche in der Regel eine Trägerscheibe ist, auf der Permanentoder Elektromagnete ein- oder beidseitig angebracht sind, und die von der Leiterscheibe durch einen schmalen Luftspalt (nicht gezeigt) berührungsfrei getrennt ist, sowie in bevorzugter Ausführung eine ferromagnetische Scheibe (1.4.3), die auf der anderen Seite der Leiterscheibe angebracht ist.

Leiterscheibe (1.4.1) und ferromagnetische Scheibe (1.4.3) rotieren auf der Welle (5), während alle anderen Elemente der Dämpfungsanordnung fest stehen und letztlich mit der Tragekonstruktion (4) verbunden sind.

Die Leiterscheibe (1.4.1) auf der Welle (5) wird durch die Rolle (2.2.1) und das Laufband (2.1) angetrieben. Letzteres ist mit den Anbindungselement (3) über das Befestigungs- oder Fixierungselement (3.1) verbunden. An dieser Position sind üblicherweise die beiden Enden des Laufbandes oder des Riemens zusammengeführt, sofern nicht ein endloser Riemen eingesetzt wird. Das Anbindungselement (3) ist in Form einer Schaukel oder eines Sessels ausgebildet, mit gegenüberliegenden Schwenk-Gelenken (3.2) mit eine gedachten Achse in Höhe des Riemens / Bandes. Auf der Bodenfläche der Schaukel ist mittig eine weiteres Gelenk (3.3) vorgesehen, dass alle Richtungen bedienen kann.

An diesem Kugelgelenk kann direkt oder kardanisch die schwingende Masse (7) des Pendels (8) oder aber die zu dämpfende Struktur (9) befestigt werden (nicht gezeigt).

Generell kann der Anbindungspunkt (3) sowohl an der Pendelmasse (7) als auch an der zu beruhigenden Konstruktion (9) befestigt werden. Erfolgt die Befestigung von (3) an (7), wird am Anbindungspunkt (6) die Struktur (9) befestigt. Wird hingegen am Anbindungspunkt (3) die Struktur (6) befestigt, erfolgt die Befestigung der Masse (7) am Anbindungspunkt (6).

Oberhalb des Fixierungselementes (3.1) ist eine Rollvorrichtung (2.3) vorgesehen. Diese Rollvorrichtung umfasst einen Laufwagen (2.3.1), an dem der Riemen / das Band (2.1) sich abstützen kann. Dessen Rollen bewegen sich auf einer oberhalb angebrachte Laufschiene (2.3.2). Der Laufwagen, der üblicherweise auf Schienen läuft, kann auch durch mehrere Stützrollen ersetzt werden oder aber durch eine Gleitvorrichtung, oder einem Förderband. Bei linearer Hin-und-Her-Bewegung des Anbindungselementes (bedingt durch die schwingende Masse des Pendels) wird also der Laufriemen und damit das Antriebsrad (2.2.1) bewegt und somit auch das rotierenden Leiterelement (1.4.1), wodurch die Dämpfung in der Anordnung (1.4) bewirkt wird.

Fig. 2: zeigt eine Seitenansicht der erfindungsgemäßen Dämpfervorrichtung aus Fig. 1. Das Laufband ist hier ein Zahnriemen (2.1), die Rollen (2.2)(2.2.1) sind Zahnräder bzw. Räder mit einem gezahnten Umlauf.

Fig. 3: zeigt eine weiter perspektivische Sicht der erfindungsgemäßen Vorrichtung gemäß Fig. 1

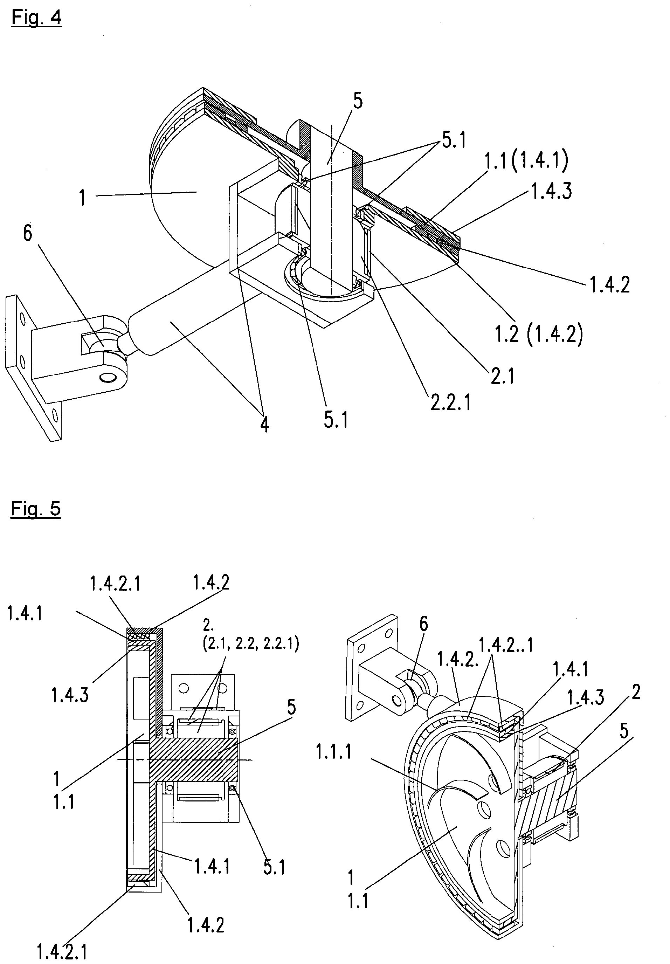

Fig. 4: zeigt einen perspektivischen Schnitt durch die Dämpferanordnung (1)(1.4) eines erfindungsgemäßen Wirbelstrom-Dämpfers. Das rotierende Element (1.1) ist wiederum einer Leiterplatte (1.4.1), welche mit der Welle (5) verbunden ist. Die Welle (5) ist entsprechend gelagert (5.1). Das feststehende Element (1.2) ist eine Trägerplatte(1.4.2) für Magnetelemente (1.4.2.1). Zwischen den beiden Plattenelementen ist ein Luftspalt zu erkennen. Durch die Antriebsrolle (2.2.1), welche durch die Bewegung des Riemens (2.1) angetrieben wird, wird die Leiterscheibe in Rotation versetzt. Die Leiterscheibe ist zudem mit einem ringförmigen ferromagnetischen Element (1.4.3) in Kontakt, welches auf der äußeren Seite des Leitescheibe angebracht ist.

Fig. 5: zeigt eine Wirbelstrom-Dämpfervorrichtung bei der die Leiter- und Magnetelemente am Umfang bzw. über dem Umfang eines Rades oder einer Scheibe angebracht sind. Das Rad / die Scheibe übernimmt hierbei die Funktion des rotierenden Elementes (1.1) und weist zudem Lüftungs- oder Kühlungselemente (hier als Schaufelrad) (1.1.1) auf. Am Umlauf des Rades ist hier ein Aluminiumband als Leiterelement (1.4.1) befestigt. Zwischen dem Leiterelement und dem Radkranz ist noch ein Eisen- oder Stahlband als Dämpfungsverstärker eingebracht. Eine feststehende Scheibe, die an der Transportvorrichtung bzw. an der Tragevorrichtung befestigt ist, dient als Trägerscheibe (1.4.2) für die Magnete (1.4.2.1), wobei die Magnete ebenfalls am Umlauf dieser Scheibe angebracht sind. Die feststehende Scheibe mit den Magneten hat einen entsprechend größeren Durchmesser als die rotierende Scheibe mit dem Leiterelement, und ist so angeordnet, dass ihr Umlauf oberhalb des Umlaufes des Leiterelementes ist. Die Magnetelement sind dann auf der inneren Seite des äußeren Umlaufes platziert, während das Leiterelement mit dem ferromagnetischen Element auf der äußeren Seite des inneren Umlaufs angeordnet ist. Eine umgekehrte Anordnung, bei der die feststehenden Teile innen angeordnet sind und das rotierende Leiter Element außen ist, ist jedoch ebenfalls möglich.

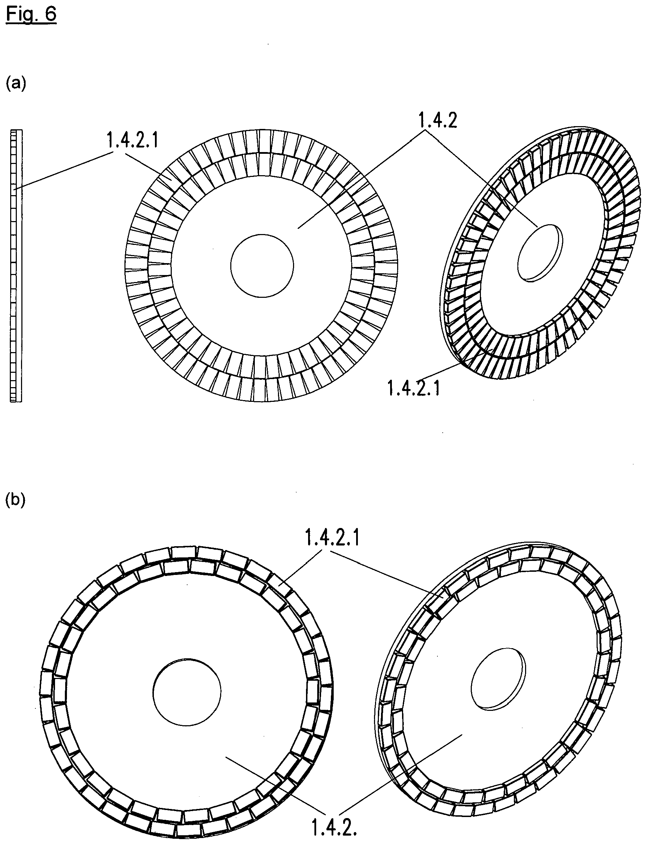

Fig. 6: zeigt mögliche Anordnungen der Magnetelemente 1.4..2.1 auf dem Trägerelement 1.4.2. (a) hier sind zwei Reihen von Magnetelementen am äußeren Rand der Trägerscheibe in radialer Ausrichtung in Bezug auf die Pole angeordnet, wobei sich vorzugsweise Nordpol und Südpol gegenüberliegen. (b) hier sind zwei Reihen von Magnetelementen mit jeweiliger tangentialer Ausrichtung angeordnet (ebenfalls vorzugsweise Nord-Süd Ausrichtung)

Fig. 7: zeigt einen erfindungsgemäßen Schwingungstilger mit Pendel (8) und Masse (7) in einem Turm (9), wobei die Masse mit drei Dämpfervorrichtungen (10), wie zuvor beschrieben, über das Anbindungselement, bzw. deren Gelenkverbindung (3.2) verbunden ist, um alle Schwingungsebenen des Pendels möglichst optimal abzudecken. Die Dämpfervorrichtungen sind weiterhin über Gelenkverbindungen (6) mit der Turmstruktur (9) verbunden.

Fig. 8: zeigt einen Errichtungstilger, der mit den erfindungsgemäßen Dämpfungsvorrichtungen (10) ausgestattet ist. Der Errichtungstilger besteht aus einem Trägerring, der auf das jeweilige Turmsegment passend aufgesetzt wird. Der Trägerring besitzt drei Arme, die pendelnden Aufhängungen (8) aufweisen, an denen die schwingenden Massen (7) hängen. Die schwingenden Massen (7) sind bei dieser Ausführungsform rund um das Turmsegment herum verteilt, angeordnet. An jedem der drei Arme ist eine Dämpfungsvorrichtung (10), wie beschrieben, über die Gelenkverbindung (6) befestigt. Die Dämpfungsvorrichtungen sind wiederum über die Gelenkverbindungen (3.3) mit den Masseelementen (7) verbunden.

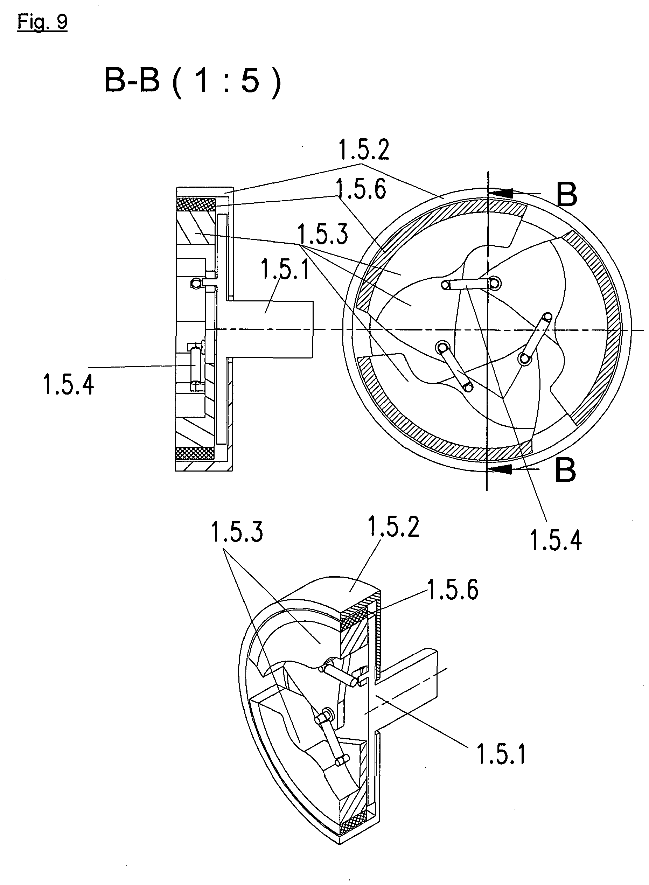

Fig. 9: zeigt einen erfindungsgemäßen Reibungsdämpfer. Auf einer rotierenden Scheibe (1.5.1) auf einer Welle sind drei Fliehkraftmassen (1.5.3) mit Rückstellfedern und Gelenken (1.5.4) angebracht. Die Fliehkraftmassen weisen kreisförmige Segmente auf, die so angeordnet sind, dass sie eine Scheibe mit kurzen Unterbrechungen ergeben. Die Kreissegmente sind an ihren äußeren Rand mit einem Brems- oder Reibungsbelag versehen.

Die rotierenden Scheibe (1.5.1) mit den so gestalteten Fliehkraftmassen bewegt sich gegenüber einer feststehenden als Bremstrommel gestalteten Scheibe (1.5.2). Bei höheren Drehzahlen werden so die Bremsbelag-Segmente an die Bremstrommel gedrückt, und somit die Drehung gehemmt.

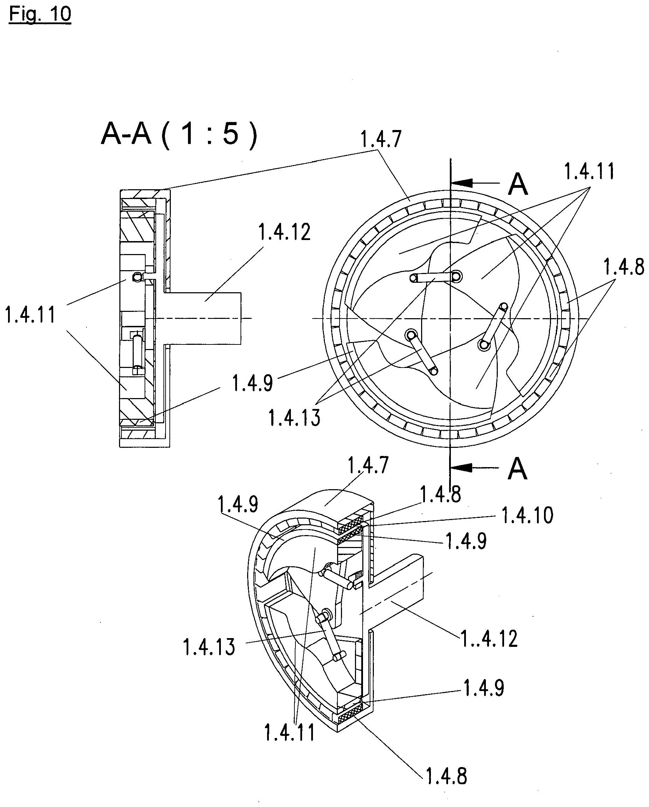

Fig. 10: zeigt einen erfindungsgemäßen Fliehkraft-Wirbelstromdämpfer. Er ist im Prinzip eine Kombination aus den Ausführungsformen der Fig. 5 und der Fig. 9. Ausgehend von der Fig. 10 ersetzen Leiterelemente (1.4.9) die Bremsbelag-Segmente (1.5.6). Ein Ring mit Magnetelementen (1.4.8) ersetzt die Bremstrommel (1.5.2), wobei der Magnetring Teil des feststehenden Elements (1.2) ist (Fig. 6). Durch die Fliehkraftmassen (1.4.11) können somit die kreisförmigen Segmente der Leiterelemente drehzahlabhängig nach außen oder nach innen bewegt werden, womit die Breite des Luftspaltes zwischen den Leiterelementen und den Magnetelementen variiert werden kann und somit auch der Dämpfungseffekt.

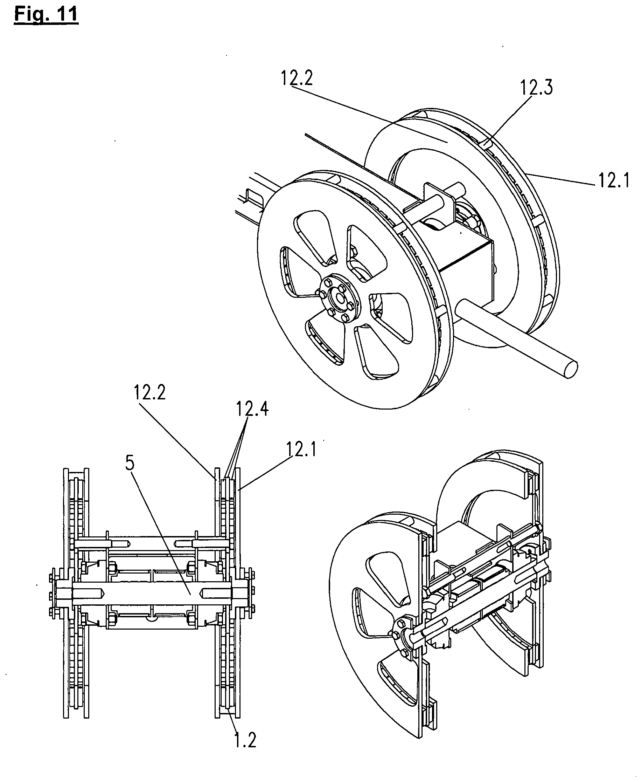

Fig. 11: zeigt eine Dämpfervorrichtung mit zwei gegenüberliegenden Dämpferanordnungen (1) aus Wirbelstrom-Dämpfungselementen (1.4) , welche an der gleichen Transportrolle (2.2) befestigt sind. Im Gegensatz zu der Ausführungsform aus Fig. 1 umfasst jede dieser Dämpfungsanordnungen (1) ein Wirbelstrom-Tandemscheibe, bestehend aus einer äußeren Leitescheibe (12.1, entsprechend 1.4.6), einer inneren Leiterscheibe (12.2) und einer dazwischen angeordneten Scheibe (12.4), welche doppelseitig mit Magneten ausgestattet ist. Äußere und innere Leiterscheibe sind über Verbindungselemente (12.3) miteinander verbunden.

In einer modifizierten Ausführungsform der Erfindung, ist die mittlere Scheibe nicht beidseitig mit Magneten bestückt, sondern besitzt Öffnungen, in denen die Magnete eingelassen sind, so dass si nach beiden Seiten wirksam sind. Somit kann die Anzahl der Magnete halbiert werden.

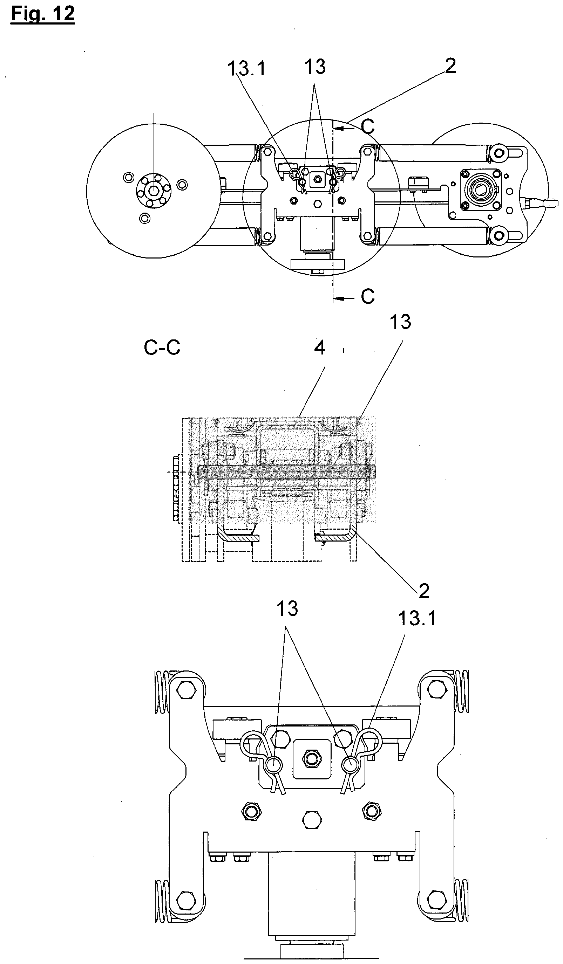

Fig. 12: zeigt verschiedene Perspektiven eines erfindungsgemäßen Dämpfers, welcher eine Arretierungsvorrichtung für die bewegbare Transportvorrichtung (2) vorsieht.

Für Wartungszwecke müssen die Tilger festgesetzt werden. Das geschieht üblicherweise durch zusätzliche Befestigungselemente mit denen die Tilger Masse an der zu beruhigenden Konstruktion festgeschraubt wird. Die hier beschriebene Arretierung ermöglicht es, die Tragekonstruktion (4) mit der Transportvorrichtung (2) fest zu verbinden.

Dies geschieht durch einen Bolzen (13) der in eine Bohrung, welche die Bauteile (2) und (4) durchdringt, gesteckt und gesichert wird. Der Laufriemen bzw. das Laufband wird durch diese Transportsicherung nicht belastet, so dass hiermit eine Fehl-Safe Verbindung besteht, die auch bei höheren Lasten eine sichere Arbeitsumgebung ermöglicht.

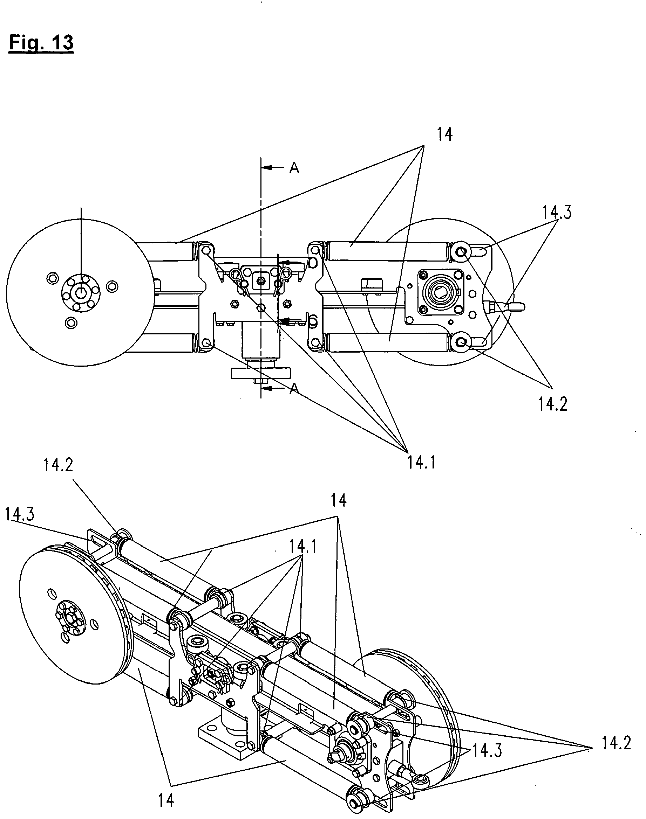

Fig 13: zeigt verschiedene Perspektiven einer erfindungsgemäßen Schwingungstilgeranordnung , welcher Einrichtungen aufweist, mit welchen die Frequenz des Tilgers bzw. des Schwingungssystems angepasst werden kann. Dies ist bei einer Windkraftanlage z.B. erforderlich, um eventuelle Toleranzen durch unterschiedliche Gründung, unterschiedliche Fundamente, unterschiedliche Turmsteifigkeiten, sowie unterschiedlicher Massen auszugleichen. Auch bei hohen Frequenzen, zum Beispiel im Zusammenhang mit der zweiten Turmeigenfrequenz im Bereich von etwa ein Herz sind Pendelstangen mit Längen von kleiner 200 mm erforderlich. Das ist geometrisch nicht oder nur sehr schwierig zu erreichen. Vor allem ist es erforderlich, dass die Pendelstangen mindestens so groß sind wie die erforderliche Schwingamplitude, sodass die Stangen schon aus diesem Grund länger werden müssen als die für die Frequenz erforderliche Länge. Dieses Problem kann erfindungsgemäß mit dem Einsatz einer oder mehrerer Zusatzfedern (14) gelöst werden. Zusatzfedern erfordern zusätzliche Anschlusspunkte (Schnittstellen) zwischen schwingender Masse und zu beruhigender Masse. Die Federelemente (14) werden zwischen der Transportvorrichtung (2) und dem feststehenden Element (1.2) der Dämpfungsanordnung (1) angebracht, wodurch diese gegeneinander verspannt werden. Sie werden vorteilhafterweise dabei so verspannt, dass die entlastete Feder bei voller Amplitude nicht locker wird.

Somit werden große dynamische Federwege gefordert. Bei seltenen großen Amplituden ist es daher vorgesehen, dass die Entlastungsfeder (14) locker werden darf. Damit die entlastete Feder bei noch größerem Fahrweg nicht eingeklemmt (geknickt, gestaucht) wird ist eine Federbefestigung (14.2) vorgesehen, die so gestaltet ist, dass diese in einem Langloch,(14.3) ausweichen kann.

Zur exakten Frequenzeinstellung ist es möglich mehr oder weniger Federn anzubringen. Weiterhin können Federn unterschiedlicher Steifigkeit eingesetzt werden.

In Fig. 13 ist die Ausführung mit 2 × 4 verschwanden Federn dargestellt. Die gezeigten Federn sind Standard Stahl Zugfedern, vorzugsweise aus nicht rostendem Stahl.

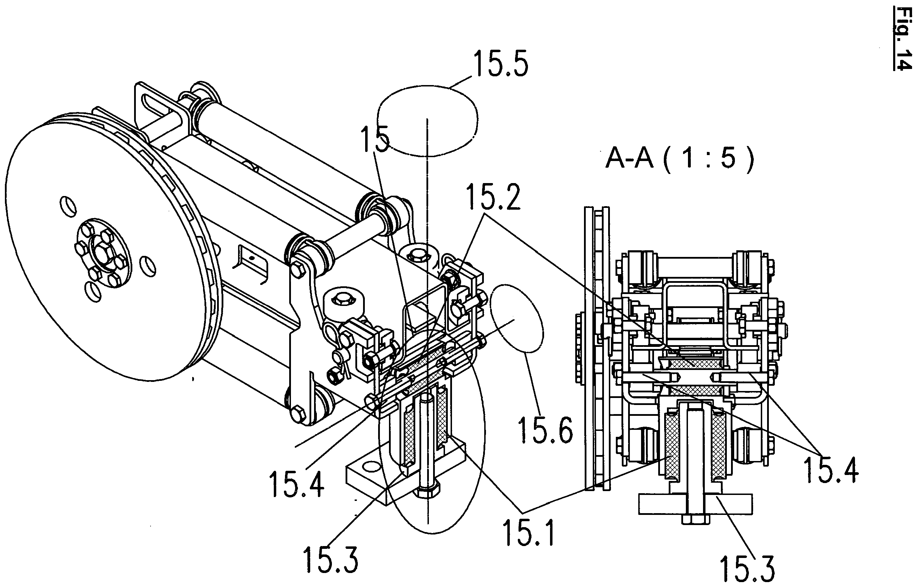

Fig 14: zeigt verschiedene Perspektiven einer erfindungsgemäßen Schwingungstilgeranordnung, welches eine Elastomer-Gelenk im Bereich des Anbindungselementes (3) aufweist, um die Gier-(Dreh-)-und Nick Bewegung der Dämpfungseinheit (1) realisieren zu können .

Für solche Anforderungen werden im bislang im allgemeinen Gleitlager oder Wälzlager verwendet. Gleitlager unterliegen einem gewissen Verschleiß, was zu einem Klappern der Gelenke führt und Wälzlager müssen meist gewartet (geschmiert) werden.

Das hier gezeigte Lager (15) besteht aus zwei baulich integrierte Elastomer - Buchsen, welche für Dreh (Gier)- und Nickbewegungen vorgesehen sind. Das Element (15.1) erlaubt die Gierbewegung (15.5) der erfindungsgemäßen Schwingungstilgervorrichtung, das Element (15.2) ist für die Nickbewegung (15.6) zuständig.

In der Darstellung sind jeweils einschichtige Buchsen dargestellt. Für größere Kräfte und größere Winkel sind mehrschichtige, (vorzugsweise zwei Elastomer-Schichten) erforderlich. Aufgrund der Elastizität solcher Buchsen in allen Richtungen übernimmt 15.1 auch ein geringen Anteil der Nick Bewegung 15.6. Gleichzeitig übernimmt 15.2 auch einen geringen Anteil der Gierbewegung 15.5.

Fig 15: zeigt einen erfindungsgemäßen Schwingungstilger mit einer stehenden bzw. nicht horizontalen Dämpfervorrichtung (10) innerhalb eines Turmes einer Windkraftanlage. Ein Vorteil einer solchen stehenden oder in einem Winkel zwischen 0 und 90 ° (gegenüber der horizontalen Ebene des Turms) angeordneten Dämpfervorrichtung im Turm ist, dass die Dämpfung beim Nulldurchgang des Pendels gering ist, während bei großen Amplituden eine starke Dämpfung erzeugt wird. Überdies kann man dadurch Platz sparen. Der Nachteil der kleinen Amplituden oder der kleinen Bewegungen im Nulldurchgang können durch Einsatz von größeren Dämpfungselemente 1 mit größeren Scheiben und ggf. mehr Magneten in Falle von Wirbelstromdämpfung, ausgeglichen werden.

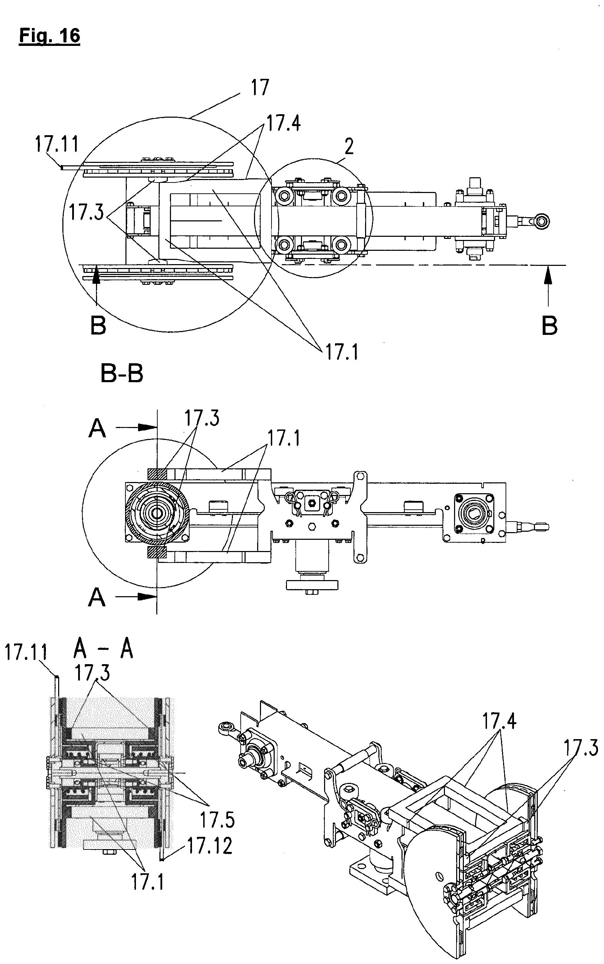

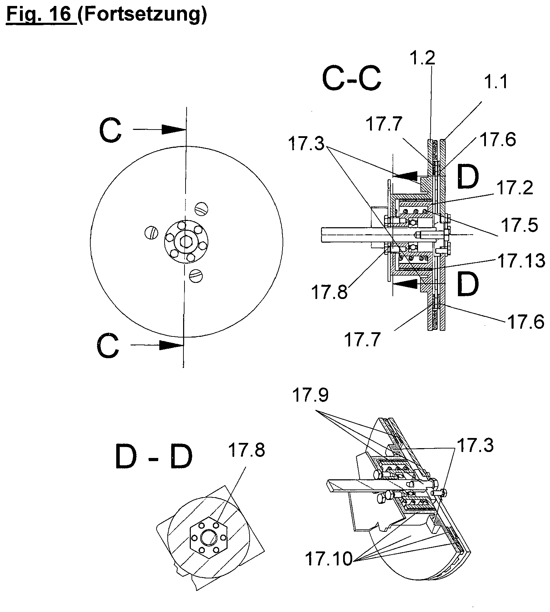

Fig 16: zeigt einen erfindungsgemäßen Schwingungstilger mit einer WirbelstromDämpfungsanordnung (1.4) , bei der die erzielte Dämpfung mit zunehmender Auslenkung der schwingenden Masse (7) und damit der Transportvorrichtung (2) größer wird, und umgekehrt mit abnehmender Auslenkung kleiner. Dazu wird der Schwingungstilger mit einer VerstellEinrichtung (17) versehen, welche den Luftspalt zwischen der Leiterplatte und der Magnetscheibe je ach Richtung der Bewegung vergrößert oder verkleinert.

Die Verstelleinrichtung (17) ermöglicht es also, die Dämpfung an beliebigen wegabhängigen Punkten der Transportvorrichtung (2) zu verringern und zu verstärken.

Grundsätzlich ist das System so aufgebaut, dass der Luftspalt zwischen Magneten und Leiterscheibe Schwing-Weg abhängig veränderbar ist. Dabei wird der Luftspalt zwischen Magneten und Leiterscheibe zwischen 15 mm und 1 mm variiert. Somit ist die Dämpfungskonstante um etwa Faktor 10 regelbar. Insbesondere wird der Luftspalt zwischen 10 mm und 2 mm geregelt, wodurch sich die Dämpfungskonstante etwa um Faktor fünf verändert. Die Verstelleinrichtung (17)(17.1) ist fest mit der Transportvorrichtung (2) verbunden. Diese fährt mit zunehmender Amplitude an Verstell-Nocken (17.3) und verschiebt hiermit das feststehende zweite Element (1.2) mit den Magneten (1.4.2) der Dämpfungsanordnung (1) mehr oder weniger nahe an die Leiterscheibe (1.4.1). Die vorgegebenen verstellte Kurven an der Verstelleinrichtung (17.4) geben den gewünschten Abstand Weg abhängig vor. Bei einem noch kleineren Luftspalt ist es möglich, zusätzlich eine Bremsscheibe (17.6)(17.7) anzubringen, welche die Dämpfung nochmals extremsteigern kann. Dabei wird der Abstand der Bremsscheibe zwischen rotierender Teil und drehendem Teil so gewählt, dass bei Berührung der Bremsscheibe die Magnete noch frei bleiben., womit gewährleistet wird, dass der Luftspalt zwischen Leiter- und Magnetplatte immer noch größer null ist.

In der Regel werden die Verstell-Kurven an der Verstelleinrichtung (17.4) so ausgeführt, dass die Dämpfung mit zunehmender Amplitude, bzw. zunehmender Auslenkung der Schwingenden Masse (7) ansteigt. Gegen Ende des Schwingweges kann die Scheibenbremse (17.6) und (17.7) hinzugeschaltet werden. Es ist jedoch auch möglich durch eine andere Gestaltung der verstellte Kurven (17.4) in jeder beliebigen Position eine große Dämpfung und gegebenenfalls zusätzliche Bremsung zu realisieren, die bei zunehmender Amplitude wieder verringert wird. Somit sind alle Voraussetzungen für die Gestaltung einer adaptiven Dämpfung gegeben.

Vorzugsweise werden mit diesem System zwei Rotationsscheiben gleichzeitig bedient. Das hat den Vorteil, dass sich die durch die Verstelleinrichtung entstehenden Querkräfte beim Eindrücken der Verstell-Nocken (17.3) aufheben. Sollte nur eine Dämpfungsanordnung (1) ausgeführt werden, so ist eine stabile Lagerung der Transportvorrichtung (2).erforderlich. Um der durch die Verstell-Nocken (17.3) eingeleiteten Kraft entgegenzuwirken, wird das Rückhol-Federelement (17.5) verwendet. Das Rückhol-Feder Element übt eine Kraft aus, welche der auf die Nocken wirkenden Kraft entgegen wirkt. Mit dieser Feder wird der "nicht rotierenden und axial verschiebbare Bereich (17.10) permanent gegen die Tragekonstruktion (4) gedrückt. Beim Eingriff der Nocken wird (17.10) in Richtung der Leiterscheibe verschoben. Damit (17.10) sich nicht mit der Leiterscheibe verdreht, ist eine Drehhemmung (17.8) vorgesehen. Dies kann beispielsweise eine Sechskant-Verbindung zwischen den Elementen (17.10) und dem Feder-Halteelement (17.2) sein. Das Federhalterelement ist fest mit der Tragekonstruktion (4) verbunden. Gleichermaßen kann auch eine axial verschiebbare Verbindung zwischen Tragekonstruktion (4) und (17.10) verwendet werden.

Die Verstellung über die Nocken (17.3) erfolgt über Reibung.

In einer weiteren Ausführungsform der Erfindung werden statt den Nocken Rollen verwendet. Hier bieten sich zum Beispiel Schwerlast-Rollenlager nach dem Stand der Technik an.

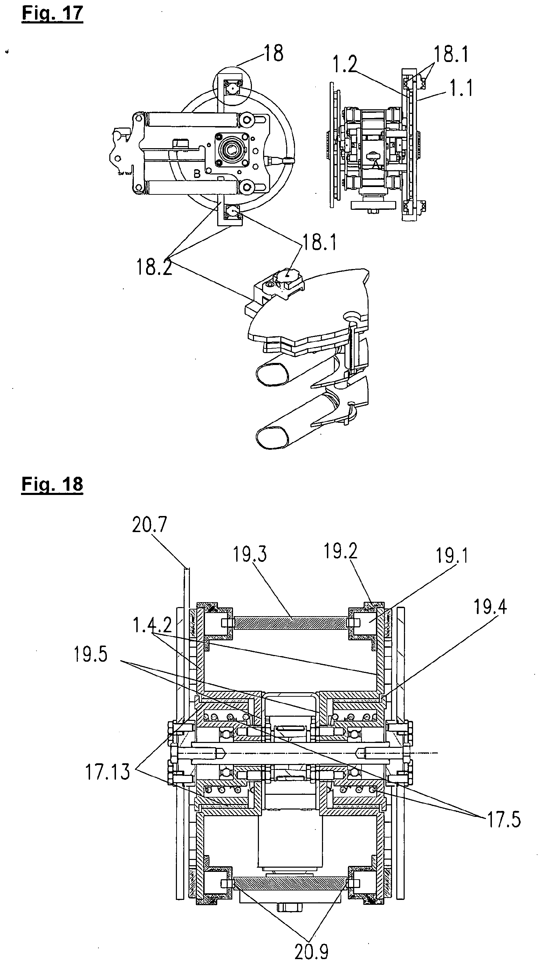

Fig 17 zeigt den Einsatz einer zusätzlichen Scheibenbremse, wobei die Bremszange (18.1) mit der Bremszangenfixierung (18.2) am Außendurchmesser der der rotierenden Leiterscheibe angreift. Vorzugsweise ist die Leiterscheibe in dem äußeren Durchmesser, an dem die Bremszange angreift aus einem festeren Material wie zum Beispiel Stahl. Sofern die Bremse nur für seltene Extremlasten verwendet wird, könnte auch der Werkstoff der Leiterscheibe, Aluminium oder Kupfer, verwendet werden, was eine einfachere Ausführungsform bedeuten würde.

Fig. 18 zeigt einen erfindungsgemäßen Schwingungstilger mit zwei gegenüberliegenden Wirbelstrom-Dämpfungsanordnungen (1.4) mit eingebauter Temperaturkompensation. Da die Leistung der Magnete mit steigender Temperatur nachlässt, ist es sinnvoll, eine Temperaturkompensation einzubauen. Diese wird zwischen den Magnetträgerplatten platziert. Der Thermostat Aktuator (19.1) dehnt sich zum Beispiel bei einer Temperatur von 50 °C aus und drückt die Magnetträgerplatten (Magnet Elemente 1.4.2) gegen die Kraft der Federn (17.5) auseinander bis diese an den Anschlag (19.4) anstoßen. Der Aktuator ist ein Element nach dem Stand der Technik, welcher die Volumenänderung beim Phasensprung eines Elementes (zum Beispiel Wachs) nutzt um einer Bewegung in Abhängigkeit von der Temperatur durchzuführen._Dadurch kommen die Magnete näher an die Leiterscheibe. Das bewirkt wiederum, dass der Luftspalt (17.11) kleiner wird und damit die Wirbelstrom Funktion verstärkt wird und somit der, durch die hohe Temperatur verursachte, Leistungsabfall ausgeglichen wird._Bei kälteren Temperaturen ziehen sich die Thermostat-Aktuatoren wieder zusammen und die Magnetelemente (1.4.2) liegen an der inneren Auflagefläche (19.5) an. Die Bewegung erfolgt über die Gleit Elemente (19.6)

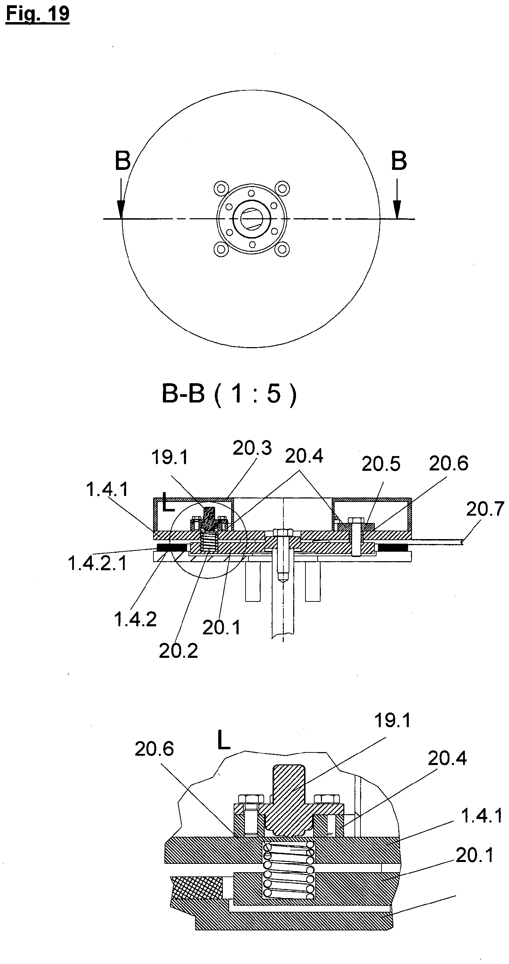

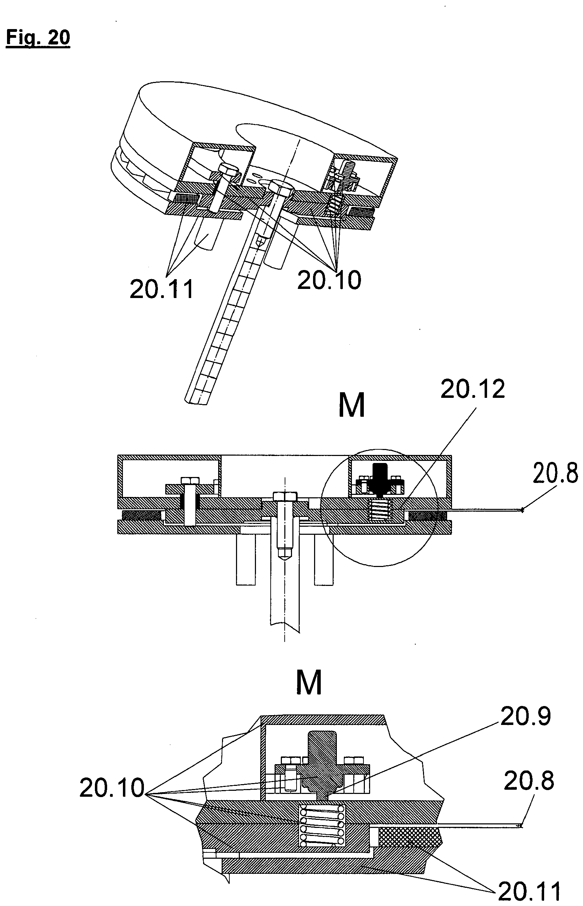

Fig. 19 / 20 zeigen eine weitere Variante zur Temperaturkompensation wird im Folgenden für den rotierenden Bereich beschrieben. Das hat gegenüber der in Fig. 19 beschriebenen Anordnung den Vorteil, dass die Aktuator die Temperatur eher heißeren Leiterscheibe erfährt und somit eine exaktere Regelung möglich ist.

Fig. 19 und Fig. 20 zeigen das rotierende und das feststehende Element losgelöst von dem gesamten Rotationsdämpfer. Fig. 19 zeigt das Element im kalten Zustand und Fig. 20 im warmen, kompensieren Zustand.

Bei dieser Konstruktion wird die rotierende Leiterscheibe bei höherer Temperatur (zum Beispiel 60 °C) mittels mehrerer am Umfang angebrachten Aktuatoren (19.1) gegen die Kraft der Magnete (20.2) in Richtung der Magnetscheibe gedrückt. Bis diese am Anschlag warmer Zustand (20.12) zum Anliegen kommt.

Beim Abkühlen" zum Beispiel bei Temperaturen kleiner 60° wird die Leiterscheibe durch die Kraft der Federn (20.2) soweit von der Magnetscheibe weggeschoben, bis dieser an dem Anschlag kalter Zustand (20.6) anliegt. Somit wird die durch kalte Temperaturen verstärkte Dämpfung zurückgeregelt.

## Patentansprüche

1. Schwingungstilgeranordnung geeignet zur Dämpfung von Schwingungen, welche in Windkraftanlagen, hohen Anlagen oder Gebäuden, oder bei deren Errichtung auftreten, umfassend mindestens eine schwingende Masse (7) einer Masseaufhängung (8), sowie eine Dämpfungsvorrichtung (10), welche einerseits mit der schwingenden Masse (7), andererseits mit der zu dämpfenden Struktur (9) der Anlage oder des Gebäudes in Verbindung steht, wobei die Dämpfungsvorrichtung (10) im Wesentlichen umfasst
(i) eine Tragekonstruktion (4),
(ii) eine Transportvorrichtung (2), die
- an oder in der Tragekonstruktion (4) untergebracht ist,
- mit der schwingenden Masse (7) verbunden ist,
- bei Anregung durch die Masse (7) in einer Richtung zwischen endständigen Anschlagspunkten linear hin und her bewegbar ist, und
- befähigt ist, die lineare Bewegung in eine Rotationsbewegung umzuwandeln, 2.
(iii) ein gelenkiges Anbindungselement (3), welches einerseits an der Transportvorrichtung (2) befestigt ist und andererseits mit der schwingenden Masse (7) oder mit der zu dämpfenden Struktur (9) in Verbindung steht, sowie ein gelenkiges Anbindungselement (6), welches einerseits mit der Tragekonstruktion (4) und andererseits, sofern die schwingende Masse (7) mit dem Anbindungselement (3) verbunden ist, mit der zu dämpfenden Struktur (9) verbunden ist, oder aber mit der schwingenden Masse (7) in Verbindung steht, sofern die zu dämpfende Struktur (9) mit dem Anbindungselement (3) verbunden ist, so dass bei relativer Bewegung der Masse (7) gegenüber der zu dämpfenden Struktur (9) besagte lineare Hin-und-Her-Bewegung der Transportvorrichtung (2) zwischen den Anschlagpunkten erfolgt,
**dadurch gekennzeichnet, dass**
die Dämpfungsvorrichtung (10) weiterhin:
(iv) mindestens eine für die eigentliche Dämpfung verantwortliche Wirbelstrom-Dämpfungsanordnung (1.4) umfasst, welche in funktioneller Verbindung mit der Transportvorrichtung (2) steht und im Wesentlichen
(a) mindestens ein im Betrieb rotierendes erstes Element (1.1) aufweist, welches als Scheibe, Rad oder Hohlrad ausgebildet ist und mit Magnetelementen (1.4.2) oder Leiterelementen (1.4.1) der Wirbelstrom-Dämpfungsanordnung ausgestattet ist, sowie
(b) mindestens ein gegenüber dem ersten Element angeordnetes, mit der Tragekonstruktion (4) verbundenes feststehendes zweites Element (1.2) aufweist, welches eine in Bezug auf das rotierende Element (1.1) entsprechend gestaltete und gegenüberliegende Scheibe, Rad, Hohlrad, oder ein Ring oder ein Teil davon ist,
wobei beide Elemente (1.1) (1.2) unter Einhaltung eines im Wesentlichen gleichbleibenden Luftspaltes parallel zueinander angeordnet sind, und die Dämpfung der schwingenden Masse (7) und der Struktur (9) durch die relative Rotationsbewegung des ersten Elements (1.1), welches durch eine entsprechende Linearbewegung der Transportvorrichtung (2) angetrieben wird, gegenüber dem zweiten Element (1.2) bewirkt wird, wodurch ein Wirbelstrom mit einem Magnetfeld induziert wird, welches der Rotation entgegenwirkt.

2. Schwingungstilgeranordnung nach Anspruch 1, worin die Wirbelstrom-Dämpfungsanordnung (1.4) in der Weise gestaltet ist, dass das im Betrieb rotierende Element (1.1) Leiterelemente (1.4.1) aufweist oder selbst ein Leiterelement ist, und das feststehende Element (1.2) magnetische Elemente (1.4.2) aufweist oder selbst ein Magnetelement ist, wobei die magnetischen Elemente (1.4.2) sich auf der Seitenfläche der zweiten Scheibe gegenüber der ersten Scheibe befinden.

3. Schwingungstilgeranordnung nach Anspruch 1, worin die Wirbelstrom-Dämpfungsanordnung (1.4) in der Weise gestaltet ist, dass das im Betrieb rotierende Element (1.1) ein Magnetelement ist oder magnetische Elemente (1.4.2) aufweist, und das feststehende Element (1.2) Leiterelemente (1.4.1) aufweist oder selbst ein Leiterelement (1.4.1) ist, wobei die magnetischen Elemente (1.4.2) sich auf der Seitenfläche der ersten Scheibe gegenüber der zweiten Scheibe befinden.

4. Schwingungstilgeranordnung nach Anspruch 1, worin die Wirbelstrom-Dämpfungsanordnung (1.4) in der Weise gestaltet ist, dass das im Betrieb rotierende Element (1.1) ein Rad, Hohlrad oder Scheibenteil ist, welches an seinem Umfang ein ringförmiges Leiterelement (1.4.1) aufweist, und das feststehende Element (1.2) ein über das rotierende Element (1.1) reichendes und geschobenes Magnetelement (1.4.2) oder ein entsprechendes Ringelement als Träger (1.4.2.1) aufweist, auf dessen innerer Ringfläche magnetische Elemente angeordnet sind.

5. Schwingungstilgeranordnung nach Anspruch 1, worin die Wirbelstrom-Dämpfungsanordnung (1.4) in der Weise gestaltet ist, dass das im Betrieb rotierende Element (1.1) ein Rad, Hohlrad oder Scheibenteil ist, welches an seinem Umfang einen Magnetring oder magnetische Elemente (1.4.2) auf einem ringförmigen Träger (1.4.2.1) aufweist, und das feststehende Element (1.2) ein über das rotierende Element (1.1) reichendes und geschobenes ringförmiges Leiterelement (1.4.1) ist.

6. Schwingungstilgeranordnung nach einem der Ansprüche 1 - 5, worin die Transportvorrichtung (2) eine Roll- oder Gleiteinrichtung (2.3) aufweist, an welche das Anbindungselement (3) während der linearen Hin-und-Her-Bewegung im Betrieb anliegt oder von ihr geführt wird, und die Roll- oder Gleiteinrichtung (2.3) eine Stützrollenvorrichtung oder eine-Laufwagenvorrichtung (2.3.1) umfasst, die auf einer oder mehreren Laufschienen (2.3.2) oder einer Laufbahn (2.3.3) bewegbar ist, und an der das Anbindungselement (3) befestigt ist.

7. Schwingungstilgeranordnung nach einem der Ansprüche 1 - 6, worin das Anbindungselement (3) an der Verbindungsstelle zur Transportvorrichtung (2) mindestens ein Gelenk (3.2) aufweist und dadurch um eine gedachte Achse quer zur Transportvorrichtung (2) schwenkbar ist.

8. Schwingungstilgeranordnung nach einem der Ansprüche 1 - 7, worin das Anbindungselement (3) an der Verbindungsstelle zur schwingenden Masse (7) oder der zu dämpfenden Struktur (9) ein Dreh- oder Kugelgelenk (3.3) und / oder ein Elastomerbuchsen-Gelenk (15)(15.1)(15.2), welches Gier- und Nickbewegungen zulässt, aufweist.

9. Schwingungstilgeranordnung nach einem der Ansprüche 1 - 8, worin die Transportvorrichtung (2) einen Laufriemen oder ein Laufband (2.1) umfasst, welcher/welches über mindestens zwei Transportrollen (2.2) umlaufend geführt wird und dabei die Roll- und Gleiteinrichtung (2.3) mit sich führt, wobei mindestens eine Transportrolle als Antriebsrad (2.2.1) für das rotierende Element (1.1) dient.

10. Schwingungstilgeranordnung nach einem der Ansprüche 1 - 9, worin die Transportvorrichtung (2) Anschlagpunkte aufweist, die in Abhängigkeit von der Bewegung der Masse (7) bzw. der Masseaufhängung (8) einstellbar sind.

11. Schwingungstilgeranordnung nach einem der Ansprüche 1 - 10, worin sie eine Arretierungsvorrichtung (13) zwischen Tragekonstruktion (4) und Transportvorrichtung (2) aufweist, die verhindert, dass die Transportvorrichtung (2) durch die schwingende Masse (7) bewegt werden kann.

12. Schwingungstilgeranordnung nach einem der Ansprüche 1 - 11, worin sie zur Frequenzanpassung eine Federvorrichtung (14)(14.1)(14.2)(14.3) aufweist, welche so angebracht ist, dass die Transportvorrichtung (2) und die Dämpfungsanordnung (1) gegeneinander verspannt werden.

13. Schwingungstilgeranordnung nach einem der Ansprüche 1 - 12, worin die Dämpfungsvorrichtung (10) mindestens eine durch die Transportvorrichtung (2) bewegbare Verstelleinrichtung (17) aufweist, mittels der die Dämpfung durch die Wirbelstrom-Dämpfungsanordnung (1.4) in Abhängigkeit vom Schwingweg der Masse (7), bzw. vom linearen Weg der Transportvorrichtung (2) durch Verringerung oder Vergrößerung des Luftspaltes (1.4.10) zwischen Leiterelement (1.4.1) und Magnetelement (1.4.2) variabel eingestellt werden kann.

14. Schwingungstilgeranordnung nach einem der Ansprüche 1 - 13, worin die Dämpfungsvorrichtung (10) eine Vorrichtung zur Temperaturkompensation (19)(20) umfasst durch Verringerung oder Vergrößerung des Luftspaltes (1.4.10) zwischen Leiterelement (1.4.1) und Magnetelement (1.4.2) in einer Wirbelstrom-Dämpfungsanordnung (1.4).

15. Schwingungstilgeranordnung nach einem der Ansprüche-1 - 14, worin die Wirbelstrom-Dämpfungsanordnung (1.4) ein ferromagnetisches Element (1.4.3) aufweist, welches mit dem Leiterelement (1.4.1) auf der dem Magnetelement (1.4.2) abgewandten Seite verbunden ist und durch einen Fliehkraftmechanismus drehzahlabhängig an das Leiterelement (1.4.1) angelegt und wieder von diesem getrennt werden kann, so dass eine zusätzliche drehzahlabhängige Dämpfung erreicht werden kann.

16. Schwingungstilgeranordnung nach einem der Ansprüche 1 - 15, die ein bis vier Wirbelstrom-Dämpfungsanordnungen (1.4), an einer Tragekonstruktion (4) aufweist.

17. Schwingungstilgeranordnung geeignet zur Dämpfung von Schwingungen, welche in Windkraftanlagen, hohen Anlagen oder Gebäuden, oder bei deren Errichtung auftreten, umfassend mindestens eine schwingende Masse (7) einer Masseaufhängung (8), sowie eine Dämpfungsvorrichtung (10), welche einerseits mit der schwingenden Masse (7) andererseits mit der zu dämpfenden Struktur (9) der Anlage oder des Gebäudes in Verbindung steht, wobei die Dämpfungsvorrichtung (10) im Wesentlichen umfasst
(i) eine Tragekonstruktion (4),
(ii) eine Transportvorrichtung (2), die
- an oder in der Tragekonstruktion (4) untergebracht ist,
- mit der schwingenden Masse (7) verbunden ist,
- bei Anregung durch die Masse (7) in einer Richtung zwischen endständigen Anschlagspunkten linear hin und her bewegbar ist, und
- befähigt ist, die lineare Bewegung in eine Rotationsbewegung umzuwandeln
(iii) ein gelenkiges Anbindungselement (3), welches einerseits an der Transportvorrichtung (2) befestigt ist und andererseits mit der schwingenden Masse (7) oder mit der zu dämpfenden Struktur (9) in Verbindung steht, sowie ein gelenkiges Anbindungselement (6), welches einerseits mit der Tragekonstruktion (4) und andererseits, sofern die schwingenden Masse (7) mit dem Anbindungselement (3) verbunden ist, mit der zu dämpfenden Struktur (9) verbunden ist, oder aber mit der schwingenden Masse (7) in Verbindung steht, sofern die zu dämpfende Struktur (9) mit dem Anbindungselement (3) verbunden ist, so dass bei relativer Bewegung der Masse (7) gegenüber der zu dämpfenden Struktur (9) besagte lineare Hin-und-Her-Bewegung der Transportvorrichtung (2) zwischen den Anschlagpunkten erfolgt,
**dadurch gekennzeichnet, dass**
(iv) die Transportvorrichtung (2) eine Roll- oder Gleiteinrichtung (2.3) aufweist, an welche das Anbindungselement (3) während der linearen Hin-und-Her-Bewegung im Betrieb anliegt oder von ihr geführt wird, und die Roll- oder Gleiteinrichtung (2.3) eine Stützrollenvorrichtung oder eine-Laufwagenvorrichtung (2.3.1) umfasst, die auf einer oder mehreren Laufschienen (2.3.2) oder einer Laufbahn (2.3.3) bewegbar ist, und an der das Anbindungselement (3) befestigt ist, und
(v) die Dämpfungsvorrichtung (10) weiterhin mindestens eine für die eigentliche Dämpfung verantwortliche Reibungsdämpfungsanordnung (1.5), Fluid-Dämpferanordnung (1.6) oder konventionelle Magnetdämpfungsanordnung (1.7), aufweist, welche in funktioneller Verbindung mit der Transportvorrichtung (2) steht und im Wesentlichen:
-- mindestens ein im Betrieb rotierendes erstes Element (1.1) umfasst, welches als Scheibe, Rad oder Hohlrad ausgebildet ist,
-- mindestens ein gegenüber dem ersten Element angeordnetes, mit der Tragekonstruktion (4) verbundenes feststehendes zweites Element (1.2) umfasst, welches eine in Bezug auf das rotierende Element (1.1) entsprechend gestaltete gegenüberliegende Scheibe, Rad, Hohlrad, oder ein Ring oder ein Teil davon ist, sowie
-- Reibungs-, Fluid-, oder konventionelle Magnet-Dämpfungselemente (1.3), umfasst, welche zwischen dem besagten ersten Element (1.1) und dem besagten zweiten Element (1.2,) angeordnet sind,
wobei die Dämpfung der schwingenden Masse (7) und der Struktur (9) durch die relative Rotationsbewegung des ersten Elements (1.1), welches durch die entsprechende Linearbewegung der Transportvorrichtung (2) angetrieben wird, gegenüber dem zweiten Element (1.2) bewirkt wird.

18. Windkraftanlage, umfassend einen Turm (9), eine Gondel mit Rotor und Rotorblättern, **dadurch gekennzeichnet, dass** sie mindestens eine Schwingungstilgeranordnung gemäß einem der Ansprüche 1 -17 aufweist.

## Claims

1. Vibration absorber arrangement suitable for damping vibrations which occur in wind turbines, tall installations or buildings, or during the erection thereof, comprising at least one swinging mass (7) of a mass suspension (8), and a damping device (10) which is connected on the one hand to the swinging mass (7) and on the other hand to the structure (9) to be damped of the installation or building, the damping device (10) substantially comprising
(i) a supporting construction (4),
(ii) a transport device (2), which
- is accommodated on or in the supporting construction (4),
- is connected to the swinging mass (7),
- can be moved back and forth linearly in one direction between end stop points when excited by the mass (7), and
- is capable of converting the linear movement into a rotational movement,
(iii) an articulated connecting element (3) which is on the one hand attached to the transport device (2) and on the other hand is connected to the swinging mass (7) or to the structure (9) to be damped, and an articulated connecting element (6) which is connected on the one hand to the supporting construction (4) and on the other hand, if the swinging mass (7) is connected to the connecting element (3), to the structure (9) to be damped, or alternatively is connected to the swinging mass (7) if the structure (9) to be damped is connected to the connecting element (3), so that said linear back-and-forth movement of the transport device (2) takes place between the stop points when the mass (7) is moved relative to the structure (9) to be damped,
**characterized in that**
the damping device (10) further comprises:
(iv) at least one eddy current damping arrangement (1.4) responsible for the actual damping, which is functionally connected to the transport device (2) and substantially has
(a) at least one first element (1.1) which rotates during operation, which is designed as a disk, wheel or internal gear wheel and is equipped with magnet elements (1.4.2) or conductor elements (1.4.1) of the eddy current damping arrangement, and
(b) at least one fixed second element (1.2) which is arranged opposite the first element, is connected to the supporting construction (4) and is a disk, wheel, internal gear wheel, or a ring or a part thereof, which is correspondingly designed and located opposite in relation to the rotating element (1.1),
both elements (1.1) (1.2) being arranged in parallel with one another while maintaining a substantially constant air gap, and the damping of the swinging mass (7) and the structure (9) being brought about by the relative rotational movement of the first element (1.1), which is driven by a corresponding linear movement of the transport device (2), with respect to the second element (1.2), as a result of which an eddy current is induced with a magnetic field which counteracts the rotation.

2. Vibration absorber arrangement according to claim 1, wherein the eddy current damping arrangement (1.4) is designed such that the element (1.1) which rotates during operation has conductor elements (1.4.1) or is itself a conductor element, and the fixed element (1.2) has magnetic elements (1.4.2) or is itself a magnet element, the magnetic elements (1.4.2) being located on the side surface of the second disk opposite the first disk.

3. Vibration absorber arrangement according to claim 1, wherein the eddy current damping arrangement (1.4) is designed such that the element (1.1) which rotates during operation is a magnet element or has magnetic elements (1.4.2), and the fixed element (1.2) has conductor elements (1.4.1) or is itself a conductor element (1.4.1), the magnetic elements (1.4.2) being located on the side surface of the first disk opposite the second disk.

4. Vibration absorber arrangement according to claim 1, wherein the eddy current damping arrangement (1.4) is designed such that the element (1.1) which rotates during operation is a wheel, internal gear wheel or disk part which has a ring-shaped conductor element (1.4.1) on its periphery, and the fixed element (1.2) has a magnet element (1.4.2) which extends and is pushed over the rotating element (1.1) or has a corresponding ring element as a support (1.4.2.1), on the inner ring surface of which magnetic elements are arranged.

5. Vibration absorber arrangement according to claim 1, wherein the eddy current damping arrangement (1.4) is designed such that the element (1.1) which rotates during operation is a wheel, internal gear wheel or disk part which has on its periphery a magnet ring or magnetic elements (1.4.2) on a ring-shaped support (1.4.2.1), and the fixed element (1.2) is a ring-shaped conductor element (1.4.1) which extends and is pushed over the rotating element (1.1).

6. Vibration absorber arrangement according to any of claims 1 to 5, wherein the transport device (2) has a rolling or sliding means (2.3) on which the connecting element (3) rests during the linear back-and-forth movement in operation, or is guided thereby, and the rolling or sliding means (2.3) comprises a supporting roller device or a carriage device (2.3.1) which can be moved on one or more running rails (2.3.2) or a track (2.3.3), and to which the connecting element (3) is attached.

7. Vibration absorber arrangement according to any of claims 1 to 6, wherein the connecting element (3) has at least one joint (3.2) at the connection point to the transport device (2) and can thereby be swiveled about an imaginary axis transverse to the transport device (2).

8. Vibration absorber arrangement according to any of claims 1 to 7, wherein the connecting element (3) has a pivot or ball joint (3.3) and/or an elastomer bushing joint (15)(15.1)(15.2), which allows yaw and pitch movements, at the connection point to the swinging mass (7) or the structure (9) to be damped.

9. Vibration absorber arrangement according to any of claims 1 to 8, wherein the transport device (2) comprises a running belt or a running band (2.1) which is guided in a circulating manner over at least two transport rollers (2.2) and thereby carries the rolling and sliding means (2.3) along with it, with at least one transport roller being used as a drive wheel (2.2.1) for the rotating element (1.1).

10. Vibration absorber arrangement according to any of claims 1 to 9, wherein the transport device (2) has stop points which can be adjusted depending on the movement of the mass (7) or the mass suspension (8).

11. Vibration absorber arrangement according to any of claims 1 to 10, wherein it has a locking device (13) between the supporting construction (4) and the transport device (2) which prevents the transport device (2) from being moved by the swinging mass (7).

12. Vibration absorber arrangement according to any of claims 1 to 11, wherein it has a spring device (14)(14.1)(14.2)(14.3) for frequency adaptation, which is installed in such a way that the transport device (2) and the damping arrangement (1) are tensioned against one another.

13. Vibration absorber arrangement according to any of claims 1 to 12, wherein the damping device (10) has at least one adjustment device (17) which can be moved by the transport device (2) and by means of which the damping by the eddy current damping arrangement (1.4) can be variably adjusted based on the swing travel of the mass (7) or on the linear travel of the transport device (2), by reducing or enlarging the air gap (1.4.10) between the conductor element (1.4.1) and the magnet element (1.4.2).

14. Vibration absorber arrangement according to any of claims 1 to 13, wherein the damping device (10) comprises a device for temperature compensation (19)(20), by reducing or enlarging the air gap (1.4.10) between the conductor element (1.4.1) and the magnet element (1.4.2) in an eddy current damping arrangement (1.4).

15. Vibration absorber arrangement according to any of claims 1 to 14, wherein the eddy current damping arrangement (1.4) has a ferromagnetic element (1.4.3) which is connected to the conductor element (1.4.1) on the side facing away from the magnet element (1.4.2) and is moved against the conductor element (1.4.1) by a centrifugal force mechanism depending on the speed of rotation and can be separated from it again, so that additional damping which is dependent on the speed of rotation can be achieved.

16. Vibration absorber arrangement according to any of claims 1 to 15, comprising one to four eddy current damping arrangements (1.4) on a supporting construction (4).

17. Vibration absorber arrangement suitable for damping vibrations which occur in wind turbines, tall installations or buildings, or during the erection thereof, comprising at least one swinging mass (7) of a mass suspension (8), and a damping device (10) which is connected on the one hand to the swinging mass (7) and on the other hand to the structure (9) to be damped of the installation or building, the damping device (10) substantially comprising
(i) a supporting construction (4),
(ii) a transport device (2), which
- is accommodated on or in the supporting construction (4),
- is connected to the swinging mass (7),
- can be moved back and forth linearly in one direction between end stop points when excited by the mass (7), and
- is capable of converting the linear movement into a rotational movement
(iii) an articulated connecting element (3) which is on the one hand attached to the transport device (2) and on the other hand is connected to the swinging mass (7) or to the structure (9) to be damped, and an articulated connecting element (6) which is connected on the one hand to the supporting construction (4) and on the other hand, if the swinging mass (7) is connected to the connecting element (3), to the structure (9) to be damped, or alternatively is connected to the swinging mass (7) if the structure (9) to be damped is connected to the connecting element (3), so that said linear back-and-forth movement of the transport device (2) takes place between the stop points when the mass (7) is moved relative to the structure (9) to be damped,
**characterized in that**
(iv) the transport device (2) has a rolling or sliding means (2.3) on which the connecting element (3) rests during the linear back-and-forth movement in operation, or is guided thereby, and the rolling or sliding means (2.3) comprises a supporting roller device or a carriage device (2.3.1) which can be moved on one or more running rails (2.3.2) or a track (2.3.3), and to which the connecting element (3) is attached, and
(v) the damping device (10) further comprises at least one frictional damping arrangement (1.5), fluid damper arrangement (1.6), or conventional magnetic damping arrangement (1.7) responsible for the actual damping, which is functionally connected to the transport device (2) and substantially comprises:
-- at least one first element (1.1) which rotates during operation and is designed as a disk, wheel or internal gear wheel,
-- at least one fixed second element (1.2) arranged opposite the first element and connected to the supporting construction (4), which is a disk, wheel, internal gear wheel, or a ring or a part thereof, which is correspondingly designed and located opposite in relation to the rotating element (1.1), and
-- friction, fluid, or conventional magnetic damping elements (1.3), which are arranged between said first element (1.1) and said second element (1.2),
the damping of the swinging mass (7) and of the structure (9) being brought about by the relative rotational movement of the first element (1.1), which is driven by the corresponding linear movement of the transport device (2), with respect to the second element (1.2).

18. Wind turbine comprising a tower (9), a nacelle with rotor and rotor blades, **characterized in that** it has at least one vibration absorber arrangement according to any of claims 1 to 17.

## Revendications

1. Agencement formant amortisseur de vibrations adapté pour l'amortissement de vibrations qui se produisent dans des éoliennes, des installations ou des bâtiments de grande hauteur, ou lors de la construction de ceux-ci, comprenant au moins une masse (7) vibrante d'une suspension de masse (8), ainsi qu'un dispositif d'amortissement (10) qui est en liaison d'une part avec la masse (7) vibrante et d'autre part avec la structure (9) à amortir de l'installation ou du bâtiment, le dispositif d'amortissement (10) comprenant sensiblement
(i) une construction de support (4),
(ii) un dispositif de transport (2) qui
- est logé sur la construction de support (4) ou dans celle-ci,
- est relié à la masse (7) vibrante,
- peut se déplacer linéairement en va-et-vient dans une direction entre des points de butée terminaux lors d'une excitation par la masse (7), et
- est capable de transformer le mouvement linéaire en un mouvement de rotation,
(iii) un élément de raccordement (3) articulé qui est fixé d'une part au dispositif de transport (2) et, d'autre part, est en liaison avec la masse (7) vibrante ou avec la structure (9) à amortir, ainsi qu'un élément de raccordement (6) articulé qui est relié d'une part à la construction de support (4) et, d'autre part, est relié à la structure (9) à amortir lorsque la masse (7) vibrante est reliée à l'élément de raccordement (3), ou bien est en liaison avec la masse (7) vibrante lorsque la structure (9) à amortir est reliée à l'élément de raccordement (3) de sorte que, lors d'un mouvement relatif de la masse (7) par rapport à la structure (9) à amortir, ledit mouvement linéaire de va-et-vient du dispositif de transport (2) se fait entre les points de butée,
**caractérisé en ce que**
en outre, le dispositif d'amortissement (10) :
(iv) comprend au moins un agencement d'amortissement par courant de Foucault (1.4) responsable de l'amortissement proprement dit, lequel agencement d'amortissement par courant de Foucault est en liaison fonctionnelle avec le dispositif de transport (2) et, sensiblement
(a) présente au moins un premier élément (1.1) qui est en rotation pendant le fonctionnement, lequel premier élément est réalisé sous la forme d'un disque, d'une roue ou d'une couronne dentée et est pourvu d'éléments magnétiques (1.4.2) ou d'éléments conducteurs (1.4.1) de l'agencement d'amortissement par courant de Foucault, et
(b) présente au moins un second élément (1.2) stationnaire agencé en regard du premier élément et relié à la construction de support (4), lequel second élément est un disque, une roue, une couronne dentée, ou un anneau ou une partie de ceux-ci, conçu en conséquence et monté en opposition par rapport à l'élément (1.1) qui est en rotation,
les deux éléments (1.1) (1.2) étant agencés parallèlement l'un à l'autre en maintenant un entrefer sensiblement constant, et l'amortissement de la masse (7) vibrante et de la structure (9) étant effectué par le mouvement de rotation relatif du premier élément (1.1), lequel est entraîné par un mouvement linéaire correspondant du dispositif de transport (2), par rapport au second élément (1.2), moyennant quoi un courant de Foucault est induit par un champ magnétique qui agit contre la rotation.

2. Agencement formant amortisseur de vibrations selon la revendication 1, dans lequel l'agencement d'amortissement par courant de Foucault (1.4) est conçu de telle manière que l'élément (1.1) qui est en rotation pendant le fonctionnement présente des éléments conducteurs (1.4.1) ou est lui-même un élément conducteur, et que l'élément (1.2) stationnaire présente des éléments magnétiques (1.4.2) ou est lui-même un élément magnétique, les éléments magnétiques (1.4.2) se trouvant sur la face latérale du second disque opposée au premier disque.

3. Agencement formant amortisseur de vibrations selon la revendication 1, dans lequel l'agencement d'amortissement par courant de Foucault (1.4) est conçu de telle manière que l'élément (1.1) qui est en rotation pendant le fonctionnement est un élément magnétique ou présente des éléments magnétiques (1.4.2), et que l'élément (1.2) stationnaire présente des éléments conducteurs (1.4.1) ou est lui-même un élément conducteur (1.4.1), les éléments magnétiques (1.4.2) se trouvant sur la face latérale du premier disque opposée au second disque.

4. Agencement formant amortisseur de vibrations selon la revendication 1, dans lequel l'agencement d'amortissement par courant de Foucault (1.4) est conçu de telle manière que l'élément (1.1) qui est en rotation pendant le fonctionnement est une roue, une couronne dentée ou une partie de disque, qui présente un élément conducteur (1.4.1) annulaire au niveau de sa circonférence, et que l'élément (1.2) stationnaire présente, comme support (1.4.2.1), un élément magnétique (1.4.2) s'étendant au-dessus de l'élément (1.1) qui est en rotation et glissant sur celui-ci, ou un élément annulaire correspondant, des éléments magnétiques étant agencés sur la surface annulaire intérieure dudit support.

5. Agencement formant amortisseur de vibrations selon la revendication 1, dans lequel l'agencement d'amortissement par courant de Foucault (1.4) est conçu de telle manière que l'élément (1.1) qui est en rotation pendant le fonctionnement est une roue, une couronne dentée ou une partie de disque, qui présente, au niveau de sa circonférence, un anneau magnétique ou des éléments magnétiques (1.4.2) sur un support (1.4.2.1) annulaire, et que l'élément (1.2) stationnaire est un élément conducteur (1.4.1) annulaire s'étendant au-dessus de l'élément (1.1) qui est en rotation et glissant sur celui-ci.

6. Agencement formant amortisseur de vibrations selon l'une des revendications 1 à 5, dans lequel le dispositif de transport (2) présente un moyen de roulement ou de glissement (2.3) sur lequel l'élément de raccordement (3) repose pendant le mouvement linéaire de va-et-vient pendant le fonctionnement, ou par lequel l'élément de raccordement est guidé, et le moyen de roulement ou de glissement (2.3) comprend un dispositif à rouleaux de support ou un dispositif formant chariot (2.3.1), lequel est mobile sur un ou plusieurs rails de roulement (2.3.2) ou sur une glissière (2.3.3), et sur lequel est fixé l'élément de raccordement (3).

7. Agencement formant amortisseur de vibrations selon l'une des revendications 1 à 6, dans lequel l'élément de raccordement (3) présente au moins une articulation (3.2) au point de liaison avec le dispositif de transport (2), et peut ainsi pivoter autour d'un axe imaginaire transversal au dispositif de transport (2).

8. Agencement formant amortisseur de vibrations selon l'une des revendications 1 à 7, dans lequel l'élément de raccordement (3) présente, au point de liaison avec la masse (7) vibrante ou la structure (9) à amortir, un pivot ou une articulation à rotule (3.3) et/ou une articulation à douille élastomère (15)(15.1)(15.2) qui permettent des mouvements de lacet et de tangage.

9. Agencement formant amortisseur de vibrations selon l'une des revendications 1 à 8, dans lequel le dispositif de transport (2) comprend une courroie mobile ou une bande mobile (2.1) qui est guidée circonférentiellement par l'intermédiaire d'au moins deux rouleaux de transport (2.2) et entraîne ainsi avec elle le moyen de roulement et de glissement (2.3), au moins un rouleau de transport servant de roue d'entraînement (2.2.1) pour l'élément (1.1) qui est en rotation.

10. Agencement formant amortisseur de vibrations selon l'une des revendications 1 à 9, dans lequel le dispositif de transport (2) présente des points de butée qui peuvent être réglés en fonction du mouvement de la masse (7) ou de la suspension de masse (8).

11. Agencement formant amortisseur de vibrations selon l'une des revendications 1 à 10, dans lequel il présente un dispositif de blocage (13) entre la construction de support (4) et le dispositif de transport (2), lequel dispositif de blocage empêche que le dispositif de transport (2) puisse être déplacé sous l'action de la masse (7) vibrante.

12. Agencement formant amortisseur de vibrations selon l'une des revendications 1 à 11, dans lequel il présente un dispositif à ressort (14)(14.1)(14.2)(14.3) permettant d'ajuster les fréquences, lequel dispositif à ressort est monté de telle sorte que le dispositif de transport (2) et l'agencement d'amortissement (1) sont serrés l'un contre l'autre.

13. Agencement formant amortisseur de vibrations selon l'une des revendications 1 à 12, dans lequel le dispositif d'amortissement (10) présente au moins un moyen de réglage (17) pouvant être déplacé par le dispositif de transport (2), moyen de réglage à l'aide duquel l'amortissement par l'agencement d'amortissement par courant de Foucault (1.4) peut être réglé de manière variable en fonction du trajet de vibration de la masse (7) ou en fonction du trajet linéaire du dispositif de transport (2), par réduction ou augmentation de l'entrefer (1.4.10) entre l'élément conducteur (1.4.1) et l'élément magnétique (1.4.2).

14. Agencement formant amortisseur de vibrations selon l'une des revendications 1 à 13, dans lequel le dispositif d'amortissement (10) comprend un dispositif permettant de compenser la température (19)(20) par réduction ou augmentation de l'entrefer (1.4.10) entre l'élément conducteur (1.4.1) et l'élément magnétique (1.4.2) dans un agencement d'amortissement par courant de Foucault (1.4).

15. Agencement formant amortisseur de vibrations selon l'une des revendications 1 à 14, dans lequel l'agencement d'amortissement par courant de Foucault (1.4) présente un élément ferromagnétique (1.4.3) qui est relié à l'élément conducteur (1.4.1) sur le côté opposé à l'élément magnétique (1.4.2), peut être placé sur l'élément conducteur (1.4.1) par un mécanisme à force centrifuge et peut à nouveau être séparé dudit élément conducteur en fonction de la vitesse de rotation, de façon à pouvoir parvenir à un amortissement supplémentaire dépendant de la vitesse de rotation.

16. Agencement formant amortisseur de vibrations selon l'une des revendications 1 à 15, qui présente un à quatre agencements d'amortissement par courant de Foucault (1.4) sur une construction de support (4).

17. Agencement formant amortisseur de vibrations adapté pour l'amortissement de vibrations qui se produisent dans des éoliennes, des installations ou des bâtiments de grande hauteur, ou lors de la construction de ceux-ci, comprenant au moins une masse (7) vibrante d'une suspension de masse (8), ainsi qu'un dispositif d'amortissement (10) qui est en liaison d'une part avec la masse (7) vibrante et d'autre part avec la structure (9) à amortir de l'installation ou du bâtiment, le dispositif d'amortissement (10) comprenant sensiblement
(i) une construction de support (4),
(ii) un dispositif de transport (2) qui
- est logé sur la construction de support (4) ou dans celle-ci,
- est relié à la masse (7) vibrante,
- peut se déplacer linéairement en va-et-vient dans une direction entre des points de butée terminaux lors d'une excitation par la masse (7), et
- est capable de transformer le mouvement linéaire en un mouvement de rotation
(iii) un élément de raccordement (3) articulé qui est fixé d'une part au dispositif de transport (2) et, d'autre part, est en liaison avec la masse (7) vibrante ou avec la structure (9) à amortir, ainsi qu'un élément de raccordement (6) articulé qui est relié d'une part à la construction de support (4) et, d'autre part, est relié à la structure (9) à amortir lorsque la masse (7) vibrante est reliée à l'élément de raccordement (3), ou bien est en liaison avec la masse (7) vibrante lorsque la structure (9) à amortir est reliée à l'élément de raccordement (3) de sorte que, lors d'un mouvement relatif de la masse (7) par rapport à la structure (9) à amortir, ledit mouvement linéaire de va-et-vient du dispositif de transport (2) se fait entre les points de butée,
**caractérisé en ce que**
(iv) le dispositif de transport (2) présente un moyen de roulement ou de glissement (2.3) sur lequel l'élément de raccordement (3) repose pendant le mouvement linéaire de va-et-vient pendant le fonctionnement, ou par lequel l'élément de raccordement est guidé, et le moyen de roulement ou de glissement (2.3) comprend un dispositif à rouleaux de support ou un dispositif formant chariot (2.3.1), lequel est mobile sur un ou plusieurs rails de roulement (2.3.2) ou sur une glissière (2.3.3), et sur lequel est fixé l'élément de raccordement (3), et
(v) le dispositif d'amortissement (10) présente en outre au moins un agencement d'amortissement par friction (1.5), un agencement formant amortisseur par fluide (1.6) ou un agencement d'amortissement magnétique (1.7) classique, responsable de l'amortissement proprement dit, lequel agencement est en liaison fonctionnelle avec le dispositif de transport (2) et sensiblement :
-- comprend au moins un premier élément (1.1) qui est en rotation pendant le fonctionnement, lequel premier élément est réalisé sous forme de disque, roue ou couronne dentée,
-- comprend au moins un second élément (1.2) stationnaire agencé en regard du premier élément et relié à la construction de support (4), lequel second élément est un disque, une roue, une couronne dentée, ou un anneau ou une partie de ceux-ci, conçu en conséquence et monté en opposition par rapport à l'élément (1.1) qui est en rotation, et
-- comprend des éléments d'amortissement (1.3) par friction, par fluide ou magnétique classique, lesquels sont agencés entre ledit premier élément (1.1) et ledit second élément (1.2),
l'amortissement de la masse (7) vibrante et de la structure (9) étant entraîné par le mouvement de rotation relatif du premier élément (1.1), lequel est entraîné par le mouvement linéaire correspondant du dispositif de transport (2), par rapport au second élément (1.2).

18. Éolienne, comprenant une tour (9), une nacelle comportant un rotor et des pales de rotor, **caractérisée en ce qu'**elle présente au moins un agencement formant amortisseur de vibrations selon l'une des revendications 1 à 17.
